# EUROPÄISCHE PATENTSCHRIFT

(11) **EP 3 300 885 B1**
(45) Veröffentlichungstag und Bekanntmachung des Hinweises auf die Patenterteilung: **22.07.2020**
(21) Anmeldenummer: 17192671.0
(22) Anmeldetag: 22.09.2017
(51) Int. Cl.: B33Y 10/00, G01B 21/04, B33Y 30/00, B33Y 50/02, B29C 64/153, B29C 64/393, B22F 3/105

(54) **VERFAHREN ZUM KALIBRIEREN EINER VORRICHTUNG ZUM HERSTELLEN EINES DREIDIMENSIONALEN OBJEKTS UND ZUM DURCHFÜHREN DES VERFAHRENS AUSGEBILDETE VORRICHTUNG**
METHOD FOR CALIBRATING A DEVICE FOR PRODUCING A THREE-DIMENSIONAL OBJECT AND DEVICE DESIGNED FOR CARRYING OUT THE METHOD
PROCÉDÉ D'ÉTALONNAGE D'UN DISPOSITIF DE FABRICATION D'UN OBJET TRIDIMENSIONNEL ET DISPOSITIF RÉALISÉ POUR LA MISE EN OEUVRE DU PROCÉDÉ

(30) Priorität: 30.09.2016 DE 102016011801
(43) Veröffentlichungstag der Anmeldung: 04.04.2018
(73) Patentinhaber: EOS GmbH Electro Optical Systems, 82152 Krailling (DE)
(72) Erfinder: PREXLER, Michael, 81245 München (DE); SCHADE, Martin, 80809 München (DE)
(74) Vertreter: Prüfer & Partner mbB Patentanwälte · Rechtsanwälte

(56) Entgegenhaltungen:
- WO-A1-2015/083104
- DE-A1-102013 208 651
- DE-A1-102013 213 547

## Beschreibung

Die vorliegende Erfindung bezieht sich auf ein Verfahren zum Kalibrieren einer Herstellvorrichtung zum generativen Herstellen eines dreidimensionalen Objekts durch schichtweises Aufbringen und selektives Verfestigen eines Aufbaumaterials, vorzugsweise eines Pulvers, sowie auf eine Vorrichtung und ein Herstellverfahren zum schichtweisen Herstellen eines dreidimensionalen Objekts.

Vorrichtungen und Verfahren dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen von Stellen im sogenannten Pulverbett, die einem Querschnitt des herzustellenden Objekts entsprechen, mit einem Laserstrahl selektiv verfestigt.

Aus der Druckschrift US 2015/0082668 A1 ist es bekannt, eine aufgetragene Schicht eines Materials entlang eines Querschnitts eines herzustellenden Objekts durch zwei Laserstrahlen abzutasten. Hierzu umfasst die Vorrichtung zwei Scanner zum Ablenken der Laserstrahlen auf vorgegebene Stellen auf dem Baufeld. Zum Kalibrieren der Vorrichtung werden Testmuster durch Verfestigen des Aufbaumaterials erzeugt und diese mittels einer Kamera erfasst und anschließend ausgewertet. Dabei kann jedoch weder ein Driften des Systems während des eigentlichen Bauvorgangs, beispielsweise durch Temperatureinfluss, noch ein Driften über einen längeren Zeitraum, beispielsweise durch mechanische Setzerscheinungen, ausgeglichen werden.

Die DE 10 2013 213 547 A1 beschreibt eine Kalibriereinrichtung für eine Vorrichtung zum schichtweisen Herstellen eines dreidimensionalen Objekts durch schichtweises Verfestigen von Aufbaumaterial durch zumindest zwei Energiestrahlen mit einem Gehäuse und einen Sensor, der in dem Gehäuse angeordnet ist. Die Kalibriereinrichtung ermöglicht ein Kalibierverfahren, bei dem iterativ die Positionen der einzelnen Laserstrahlen bestimmt werden, bei denen der Sensor der Kalibriereinrichtung das maximale Ausgangssignal liefert. Aus einem Vergleich dieser Positionen miteinander und/oder mit den entsprechenden Sollpositionen können Abweichungen erkannt und korrigiert werden.

Die Aufgabe der vorliegenden Erfindung besteht darin, eine alternative bzw. verbesserte Vorrichtung bzw. ein alternatives bzw. verbessertes Verfahren zum Kalibrieren einer Herstellvorrichtung zum generativen Herstellen eines dreidimensionalen Objekts durch schichtweises Aufbringen und selektives Verfestigen eines Aufbaumaterials bereitzustellen.

Diese Aufgabe wird gelöst durch ein Kalibrierverfahren gemäß Anspruch 1, ein Herstellverfahren gemäß Anspruch 11, ein Computerprogramm gemäß Anspruch 12, eine Steuereinrichtung gemäß Anspruch 13 und eine Herstellvorrichtung gemäß Anspruch 14. Weiterbildungen der Erfindung sind jeweils in den Unteransprüchen angegeben. Dabei können die Verfahren auch durch die untenstehenden bzw. in den Unteransprüchen ausgeführten Merkmale der Vorrichtungen weitergebildet sein oder umgekehrt, bzw. die Merkmale der Verfahren können auch jeweils untereinander zur Weiterbildung genutzt werden.

Das erfindungsgemäße Kalibrierverfahren dient zum Kalibrieren einer Herstellvorrichtung zum generativen Herstellen eines dreidimensionalen Objekts durch schichtweises Aufbringen und selektives Verfestigen eines Aufbaumaterials, vorzugsweise eines Pulvers, innerhalb eines in einer Arbeitsebene liegenden Baufelds. Die Herstellvorrichtung weist zumindest zwei Scaneinheiten auf, von denen jede in der Lage ist, einen Strahl auf verschiedene Zielpunkte auf der Arbeitsebene, vorzugsweise auf dem Baufeld zu richten, die innerhalb eines der jeweiligen Scaneinheit zugeordneten Scanbereichs liegen, wobei die Scanbereiche der zumindest zwei Scaneinheiten einander in einem Überlappbereich überlappen. Dabei wird zumindest einer ersten der zumindest zwei Scaneinheiten eine erste Überwachungseinheit zugeordnet, deren Überwachungsbereich sich auf einen Zielpunkt der ersten Scaneinheit und dessen nähere Umgebung erstreckt, wobei eine Änderung einer Position des Überwachungsbereichs in Abhängigkeit von einer Änderung einer Position des Zielpunkts durchgeführt wird. Das Kalibrierverfahren weist die folgenden Schritte auf: Richten des Überwachungsbereichs der ersten Überwachungseinheit auf einen Bereich in dem Überlappbereich, ohne dass von der ersten Scaneinheit ein Strahl ausgeht, Bestrahlen zumindest eines Teils des Überwachungsbereichs der ersten Überwachungseinheit mit einem Strahl über eine zweite der zumindest zwei Scaneinheiten, und Auswerten eines Ausgangssignals der ersten Überwachungseinheit.

Die Änderung der Position des Überwachungsbereichs kann dabei gleichzeitig oder unmittelbar nach einer Änderung der Position des Zielpunkts durchgeführt werden oder in größerem zeitlichem Abstand, z. B. mit definiertem Zeitversatz. Bevorzugt ist die gleichzeitige Änderung.

Unter dem Scanbereich einer Scaneinheit wird dabei eine Fläche in einer das Baufeld enthaltenden Arbeitsebene verstanden, welche Fläche von einem Strahl gescannt, d. h. überstrichen bzw. abgetastet werden kann. Vorzugsweise umfasst der Scanbereich zumindest einen Teil des Baufelds. Die Fläche des Scanbereichs kann dabei eine beliebige geometrische Form aufweisen, z. B. kreisförmig, rechteckig oder polygonal sein. Der Überlappbereich kann ein Bereich sein, in dem zwei oder mehrere Scanbereiche einander überlappen. Falls es mehrere Überlappbereiche gibt, können diese aneinander angrenzen oder zusammenhängen oder separat voneinander liegen. Vorzugsweise umfasst der Überlappbereich zumindest einen Teil des Baufelds. Der prozentuale Überlapp, d. h. der flächenmäßige Anteil eines Scanbereichs, der in dem Überlappbereich liegt, kann 100% betragen und kann vorzugsweise zwischen etwa 10% und etwa 90% der Fläche des Scanbereichs liegen. Der Überwachungsbereich liegt vorzugsweise innerhalb des Baufelds. Er kann eine beliebige Form haben und beispielsweise das gesamte Baufeld umfassen. Er kann aber auch kleiner als das Baufeld sein, vorzugsweise kleiner als der Überlappbereich. Die Erstreckung des Überwachungsbereichs innerhalb des Baufelds erfordert vorteilhafterweise eine geringere Auslenkung der Strahlen, was eine höhere Genauigkeit bewirkt. Zudem wird mehr bauliche Freiheit ermöglicht. Vorzugsweise ist der Überwachungsbereich kreisförmig mit einem Durchmesser von maximal etwa 30 mm, besonders bevorzugt maximal etwa von einem Dreifachen eines Durchmessers einer Auftrefffläche eines fokussierten Laserstrahls auf dem Baufeld.

Die Vorgänge des Auswertens und des Kalibrierens können zu einem beliebigen Zeitpunkt nach einem Erfassen eines Eingangssignals durch eine Überwachungseinheit durchgeführt werden, beispielsweise unmittelbar nach dem Erfassen in Echtzeit oder in einem gegebenenfalls durch weitere Bedingungen definierten zeitlichen Abstand nach dem Erfassen eines Eingangssignals.

Da der Überwachungsbereich der ersten Überwachungseinrichtung den Zielpunkt der ersten Scaneinheit umfasst, ist es beispielsweise möglich, eine Positionsabweichung der beiden Scanner voneinander auf einfache und schnelle Art und Weise zu erkennen und gegebenenfalls automatisch zu kompensieren. Zudem ermöglicht das erfindungsgemäße Kalibrierverfahren beispielsweise ein Kalibrieren der Scanner nicht nur vor der Herstellung eines dreidimensionalen Objekts, sondern auch während dessen Herstellung, bevorzugt mehrfach während dessen Herstellung, wodurch die Genauigkeit des hergestellten Objekts verbessert werden kann. Eine Genauigkeit kann z. B. eine Maßhaltigkeit oder eine Oberflächenbeschaffenheit oder eine innere Struktur eines Bauteils betreffen, insbesondere in Bereichen des Bauteils, die sich über mehrere Scanbereiche erstrecken.

Vorzugsweise wird der zweiten Scaneinheit eine zweite Überwachungseinheit zugeordnet, deren Überwachungsbereich sich auf einen Zielpunkt der zweiten Scaneinheit und dessen nähere Umgebung erstreckt, wobei eine Änderung einer Position des Überwachungsbereichs der zweiten Überwachungseinheit in Abhängigkeit von einer Änderung einer Position des Zielpunkts der zweiten Scaneinheit durchgeführt wird. Das Kalibrierverfahren weist dann einen Schritt des Auswertens eines Ausgangssignals der zweiten Überwachungseinheit auf. Dadurch können beispielsweise durch den auf das Aufbaumaterial auftreffenden Strahl erzeugte Effekte, beispielsweise eine Erwärmung der Auftreffstelle bis hin zu einem entstehenden Schmelzbad, überwacht werden. Alternativ oder zusätzlich können Störungen, die das Ausgangssignal beider Überwachungseinheiten gleichzeitig beeinflussen, und zum Beispiel durch auftretende Rauche, Schmauche oder Dämpfe bewirkt werden, erkannt und gegebenenfalls kompensiert werden.

Vorzugsweise weist das Kalibrierverfahren die folgenden Schritte auf: Richten des Überwachungsbereichs der zweiten Überwachungseinheit auf einen Bereich in dem Überlappbereich, ohne dass von der zweiten Scaneinheit ein Strahl ausgeht, Bestrahlen zumindest eines Teils des Überwachungsbereichs der zweiten Überwachungseinheit mit einem Strahl über die erste Scaneinheit, und Auswerten eines Ausgangssignals der zweiten Überwachungseinheit. Durch die Verwendung beider Strahlen und beider Überwachungseinheiten lässt sich die Genauigkeit der Kalibrierung weiter verbessern.

Vorzugsweise wird der Überwachungsbereich der ersten Überwachungseinheit auf den Zielpunkt der ersten Scaneinheit und/oder der zweiten Scaneinheit und dessen nähere Umgebung auf dem Baufeld begrenzt. Durch die Begrenzung des Überwachungsbereichs kann beispielsweise die Messgenauigkeit erhöht werden, und es können einfachere Überwachungssensoren verwendet werden.

Vorzugsweise ist der Strahl einer Scaneinheit ein Strahl einer zum Verfestigen des Aufbaumaterials geeigneten Strahlung, vorzugsweise einer Laserstrahlung und/oder ein Zielstrahl und/oder ein Laserstrahl, dessen Energie nicht zum Verfestigen des Aufbaumaterials ausreicht. Dadurch ist es beispielsweise möglich, das Kalibrierverfahren während des Bauvorgangs und/oder davor, beispielsweise beim Einrichten einer Herstellvorrichtung und/oder danach und/oder während einer Unterbrechung des Bauvorganges durchzuführen. Ein Laserstrahl, dessen Energie nicht zum Verfestigen des Aufbaumaterials ausreicht, kann beispielsweise dadurch erzeugt werden, dass ein Laserstrahlung mit einer Intensität, die bei langsamem Verfahren über das Baufeld zum Verfestigen ausreichen würde, so schnell über das Baufeld verfahren wird, dass dem Aufbaumaterial an einer Stelle während der Zeit, in der der Strahl über diese Stelle fährt, nicht genügend Energie zugeführt wird, um verfestigt zu werden.

Vorzugsweise erfolgt das Bestrahlen des Überwachungsbereichs der einer Scaneinheit zugeordneten Überwachungseinheit mit dem Strahl einer jeweils anderen Scaneinheit in Form eines Scannens, wobei das Scannen vorzugsweise nach einem vorbestimmten Muster durchgeführt wird. Dadurch kann beispielsweise aus dem Ausgangssignal der Überwachungseinheit mehr Information gewonnen werden als beim Bestrahlen eines festen Punktes. Das vorbestimmte Muster kann jedes beliebige Muster sein. Es kann beispielsweise Punkte und/oder Linien umfassen, beispielsweise eine Schar paralleler Linien (auch als "Hatch" bezeichnet).

Vorzugsweise enthält das Auswerten des Ausgangssignals das Bestimmen eines Extremwerts des Ausgangssignals und/oder das Vergleichen eines Signalverlaufs des Ausgangssignals mit einem vorbestimmten Vergleichsmuster. Dadurch ist es beispielsweise möglich, einen Versatz zwischen den Zielpositionen beider Scanner zu erfassen.

Vorzugsweise wird das Kalibrierverfahren für mehr als einen Bereich in dem Überlappbereich durchgeführt und/oder das Kalibrierverfahren wird mehrmals hintereinander durchgeführt, vorzugsweise in vorbestimmten Zeitabständen und/oder nach einer vorbestimmten Anzahl von aufgebrachten Schichten, in weiter bevorzugter Weise in jeder Schicht, und/oder das Kalibrierverfahren wird dynamisch durchgeführt, indem der Strahl einer Scaneinheit über die Arbeitsebene, vorzugsweise das Baufeld bewegt wird und der Überwachungsbereich einer einer anderen Scaneinheit zugeordneten Überwachungseinheit dieser Bewegung nachgeführt wird und/oder der Überwachungsbereich einer einer Scaneinheit zugeordneten Überwachungseinheit über die Arbeitsebene, vorzugsweise das Baufeld bewegt wird und der Strahl einer jeweils anderen Scaneinheit dieser Bewegung nachgeführt wird. Dadurch kann beispielsweise ein Versatz zwischen einer Soll-Position eines Laserstrahls, d. h. einer Koordinate oder einem Koordinatenbereich auf der Arbeitsebene, auf die der Laserstrahl, z. B. durch Ansteuern eines betreffenden Scanners, gerichtet werden soll, und einer Ist-Position, d. h. einer tatsächlichen Position einer Auftreffstelle eines Laserstrahls auf die Arbeitsebene, nicht nur an einer Stelle, sondern an mehreren Stellen im Überlappungsbereich erfasst werden. So kann es beispielsweise möglich werden, neben einem Versatz auch eine Drehung und/oder Streckung zu erfassen und Änderungen einer Fokuslage der Laserstrahlung zu erkennen.

Vorzugsweise ist ein Strahlengang einer zum Überwachen des Überwachungsbereichs einer Überwachungseinheit dienenden Strahlung zumindest abschnittsweise umgekehrt gleich einem Strahlengang eines Strahls einer zum Verfestigen des Aufbaumaterials geeigneten Strahlung und/oder eines Zielstrahls und/oder eines Laserstrahls, dessen Energie nicht zum Verfestigen des Aufbaumaterials ausreicht. Dadurch kann beispielsweise erreicht werden, dass eine Änderung einer Position des Überwachungsbereichs automatisch in Abhängigkeit von einer Änderung der Position des entsprechenden Zielpunkts durchgeführt wird. Der Begriff "Strahlengang" wird in der vorliegenden Anmeldung so verwendet, dass ihm eine Richtung zugeordnet ist, im Gegensatz zu einer rein geometrischen Verwendung des Begriffs. Der Strahlengang des Laserstrahls verläuft dabei vom Laser zum Baufeld, derjenige der zum Überwachen dienenden Strahlung vom Baufeld zur Überwachungseinheit.

Vorzugsweise werden aus der Auswertung des Ausgangssignals Korrekturdaten für eine Positionierung zumindest eines der Strahlen ermittelt, wobei bei der Ermittlung der Korrekturdaten vorzugsweise ein Unterschied zwischen einer Wellenlänge einer zum Überwachen des Überwachungsbereichs einer Überwachungseinheit dienenden Strahlung und einer Wellenlänge einer zum Verfestigen des Aufbaumaterials geeigneten Strahlung und/oder eines Zielstrahls und/oder eines Laserstrahls, dessen Energie nicht zum Verfestigen des Aufbaumaterials ausreicht, berücksichtigt wird. Dadurch ist es beispielsweise möglich, erkannte Abweichungen zwischen zwei Scannern beim Herstellen eines Objekts durch eine entsprechende Ansteuerung eines oder beider Scanner unter Verwendung der Korrekturdaten zu kompensieren.

Das erfindungsgemäße Herstellverfahren zum generativen Herstellen eines dreidimensionalen Objekts durch schichtweises Aufbringen und selektives Verfestigen eines Aufbaumaterials, vorzugsweise eines Pulvers, umfasst die Schritte: Aufbringen einer Schicht des Aufbaumaterials auf ein in einer Arbeitsebene liegendes Baufeld, Verfestigen der Schicht des Aufbaumaterials an dem jeweiligen Querschnitt des Objekts entsprechenden Stellen durch selektives Bestrahlen innerhalb des Baufelds mit zumindest zwei Strahlen einer zur Verfestigung des Aufbaumaterials geeigneten Strahlung, vorzugsweise einer Laserstrahlung, und Wiederholen der Schritte des Aufbringens und des Verfestigens, bis das dreidimensionale Objekt fertiggestellt ist. Dabei wird zumindest einmal vor dem Herstellverfahren und/oder während des Herstellverfahrens ein derartiges Kalibrierverfahren durchgeführt. Damit kann beispielsweise ein dreidimensionales Objekt hergestellt werden, bei dem die durch das Kalibrierverfahren erfassten Abweichungen der Ist-Positionen beider Strahlen kompensiert werden.

Das erfindungsgemäße Computerprogramm, das in eine programmierbare Steuereinheit ladbar ist, umfasst Programmcodemittel, um alle Schritte eines erfindungsgemäßen Kalibrierverfahrens und/oder eines erfindungsgemäßen Herstellverfahrens auszuführen, wenn das Computerprogramm auf der Steuereinheit ausgeführt wird. Dadurch ist es möglich, das erfindungsgemäße Kalibrier- bzw. Herstellverfahren computergesteuert durchzuführen.

Die erfindungsgemäße Steuereinrichtung ist geeignet für eine Herstellvorrichtung zum generativen Herstellen eines dreidimensionalen Objekts durch schichtweises Aufbringen und selektives Verfestigen eines Aufbaumaterials, vorzugsweise eines Pulvers. Die Herstellvorrichtung enthält einen Beschichter zum Aufbringen einer Schicht des Aufbaumaterials auf ein in einer Arbeitsebene liegendes Baufeld und zumindest zwei Scaneinheiten, von denen jede in der Lage ist, einen Strahl auf verschiedene Zielpunkte auf der Arbeitsebene, vorzugsweise auf dem Baufeld zu richten, die innerhalb eines der jeweiligen Scaneinheit zugeordneten Scanbereichs liegen, wobei die Scanbereiche der zumindest zwei Scaneinheiten einander in einem Überlappbereich überlappen. Zumindest einer ersten der zumindest zwei Scaneinheiten ist zumindest eine Überwachungseinheit zugeordnet, deren Überwachungsbereich sich auf einen Zielpunkt der ersten Scaneinheit und dessen nähere Umgebung erstreckt, wobei eine Änderung einer Position des Überwachungsbereichs in Abhängigkeit von einer Änderung einer Position des Zielpunkts durchgeführt wird. Die Steuereinheit ist ausgebildet, die Herstellvorrichtung so zu steuern, dass sie die Schritte des Aufbringens und des selektiven Verfestigens wiederholt, bis das Objekt fertiggestellt ist, und zumindest einmal vor und/oder während des Herstellens des Objekts ein oben beschriebenes Kalibrierverfahren durchführt. Mit einer solchen Steuereinrichtung ist es beispielsweise möglich, eine Herstellvorrichtung so zu steuern, dass die oben für das Kalibrier- bzw. Herstellverfahren beschriebenen Wirkungen erzielt werden. Der Begriff "ausgebildet zu" bedeutet dabei, dass die Steuereinrichtung (oder auch die unten angeführte Herstellvorrichtung) so gestaltet bzw. eingestellt ist, dass sie im Betrieb die entsprechenden Verfahren bzw. Verfahrensschritte durchführen kann.

Die erfindungsgemäße Herstellvorrichtung zum generativen Herstellen eines dreidimensionalen Objekts durch schichtweises Aufbringen und selektives Verfestigen eines Aufbaumaterials, vorzugsweise eines Pulvers, enthält einen Beschichter zum Aufbringen einer Schicht des Aufbaumaterials auf ein in einer Arbeitsebene liegendes Baufeld und zumindest zwei Scaneinheiten, von denen jede in der Lage ist, einen Strahl auf verschiedene Zielpunkte auf der Arbeitsebene, vorzugsweise auf dem Baufeld zu richten, die innerhalb eines einer jeweiligen Scaneinheit zugeordneten Scanbereichs liegen, wobei die Scanbereiche der zumindest zwei Scaneinheiten einander in einem Überlappbereich überlappen, wobei zumindest einer ersten der zumindest zwei Scaneinheiten zumindest eine Überwachungseinheit zugeordnet wird, deren Überwachungsbereich sich auf einen Zielpunkt der ersten Scaneinheit und dessen nähere Umgebung erstreckt, wobei eine Änderung einer Position des Überwachungsbereichs in Abhängigkeit von einer Änderung einer Position des Zielpunkts durchgeführt wird. Die Herstellvorrichtung ist ausgebildet und/oder gesteuert, die Schritte des Aufbringens und des selektiven Verfestigens zu wiederholen, bis das Objekt fertiggestellt ist, und zumindest einmal vor und/oder während des Herstellens des Objekts ein oben beschriebenes Kalibrierverfahren durchzuführen. Mit einer solchen Herstellvorrichtung ist es beispielsweise möglich, eine Positionsabweichung der beiden Scanner voneinander auf einfache und schnelle Art und Weise zu erkennen und die Scanner auch während der Herstellung eines dreidimensionalen Objekts kalibrieren zu können.

Vorzugsweise enthält die Überwachungseinheit einen optischen Sensor, welcher vorzugsweise eine Fotodiode und/oder einen ortsauflösenden optischen Sensor enthält, vorzugsweise einen CMOS- oder CCD-Sensor, wobei die Überwachungseinheit in weiter bevorzugter Weise als Kamera ausgebildet ist. Damit kann beispielsweise ein Zielpunkt eines Strahls auf einfache Art und Weise überwacht werden. Unter "optisch" ist im Sinne der vorliegenden Anmeldung nicht allein der Bereich des sichtbaren Lichts zu verstehen, sondern auch die diesem benachbarten Bereiche der Infrarot- bzw. Ultraviolettstrahlung.

Vorrichtungsteile, die zum Ausführen der erfindungsgemäßen Verfahren dienen, können auch getrennt von der Vorrichtung als Aus- und/oder Nachrüsteinrichtung zum Aus- und/oder Nachrüsten einer Herstellvorrichtung bereitgestellt sein. Damit kann beispielsweise eine konventionelle Herstellvorrichtung im Voraus mit einer entsprechenden Ausrüsteinrichtung ausgerüstet oder im Nachhinein mit einer entsprechenden Nachrüsteinrichtung nachgerüstet werden. Die Aus- und/oder Nachrüsteinrichtung kann beispielsweise eine Berechnungseinheit und/oder eine Speichereinheit enthalten, die zum Speichern von Vergleichsdaten dient, beispielsweise vorbestimmter Vergleichsmuster. So kann beispielsweise die erfindungsgemäße Steuereinheit als Aus- und/oder Nachrüsteinrichtung für eine Herstellvorrichtung bereitgestellt sein. Die erfindungsgemäße Herstellvorrichtung kann dann auch eine Vorrichtung sein, die mit einer solchen Aus- und/oder Nachrüsteinrichtung aus- und/oder nachgerüstet ist.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer Vorrichtung zum generativen Herstellen eines dreidimensionalen Objekts, die zum Durchführen eines Kalibrierverfahrens gemäß der vorliegenden Erfindung ausgebildet ist.
- Fig. 2: ist eine schematische Darstellung eines Strahlenverlaufs in der in Fig. 1 gezeigten Vorrichtung.
- Fig. 3a: ist eine schematische Draufsicht auf eine zu verfestigende Pulverschicht, wobei ein Überwachungsbereich und eine Spur einer Auftrefffläche eines Laserstrahls für ein Kalibrierverfahren gemäß einer ersten Ausführungsform der vorliegenden Erfindung für den Fall gezeigt sind, dass die Spur mittig durch den Überwachungsbereich verläuft.
- Fig. 3b: zeigt schematisch ein von einem Sensor ausgegebenes Ausgangssignal.
- Fig. 4a und 4b: entsprechen Fig. 3a und 3b für den Fall, dass dass die Spur nicht mittig durch den Überwachungsbereich verläuft.
- Fig. 5a und 5b: entsprechen Fig. 3a und 3b, wobei jedoch ein Differenzsignal aus Ausgangssignalen gebildet wird, die von zwei Sensoren ausgegeben wurden.
- Fig. 6a: und 6d zeigen schematische Draufsichten auf eine zu verfestigende Pulverschicht, wobei jeweils ein Weg eines Überwachungsbereichs und ein Weg einer Auftrefffläche eines Laserstrahls für ein Kalibrierverfahren gemäß einer zweiten Ausführungsform der vorliegenden Erfindung gezeigt sind.
- Fig. 6b: zeigt ein Ausgangssignal eines Sensors und Fig. 6c ein Differenzsignal aus Ausgangssignalen von zwei Sensoren.

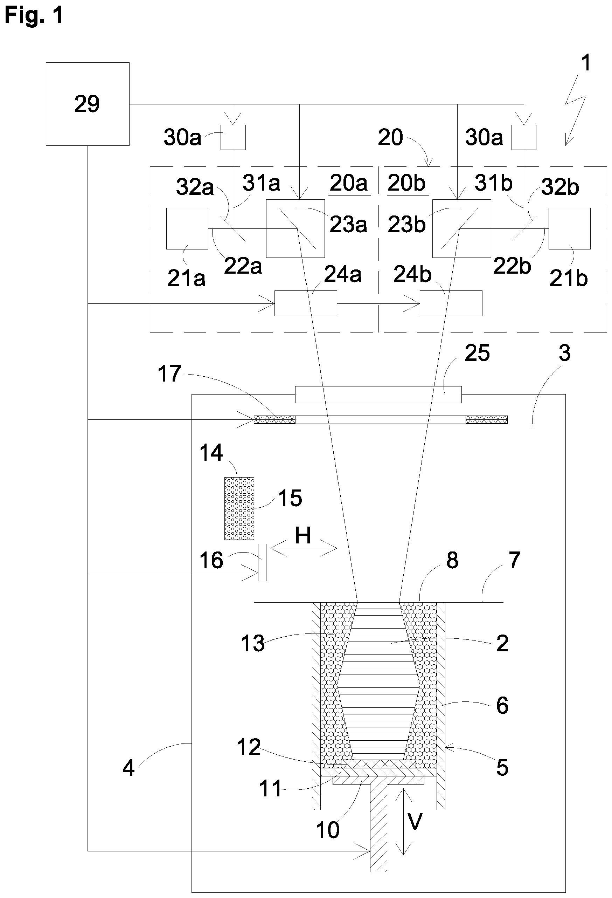

Im Folgenden wird mit Bezug auf Fig. 1 eine Vorrichtung beschrieben, die zum Durchführen eines erfindungsgemäßen Kalibrierverfahrens ausgebildet ist. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Behälterwandung 6 angeordnet. Durch die obere Öffnung des Behälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 innerhalb des Baufelds 8. Optional ist in der Prozesskammer 3 eine Strahlungsheizung 17 angeordnet, die zum Beheizen des aufgebrachten Aufbaumaterials 15 dient. Als Strahlungsheizung 17 kann beispielsweise ein Infrarotstrahler vorgesehen sein.

Die Lasersintervorrichtung 1 enthält ferner eine Belichtungsvorrichtung 20. Diese Belichtungsvorrichtung ist in der Lage, das Baufeld 8 gleichzeitig mit zwei Laserstrahlen abzutasten. Dazu erhält die Belichtungsvorrichtung 20 in der vorliegenden Ausführungsform eine erste Belichtungseinheit 20a und eine zweite Belichtungseinheit 20b. Die erste und die zweite Belichtungseinheit 20a, 20b enthalten jeweils einen Laser 21a, 21b, der einen Laserstrahl 22a, 22b erzeugt, der über eine Umlenkvorrichtung (Scanner) 23a, 23b umgelenkt und durch eine Fokussiervorrichtung 24a, 24b über ein Einkoppelfenster 25, das an der Oberseite der Prozesskammer 3 in der Kammerwandung 4 angebracht ist, auf die Arbeitsebene 7 fokussiert wird.

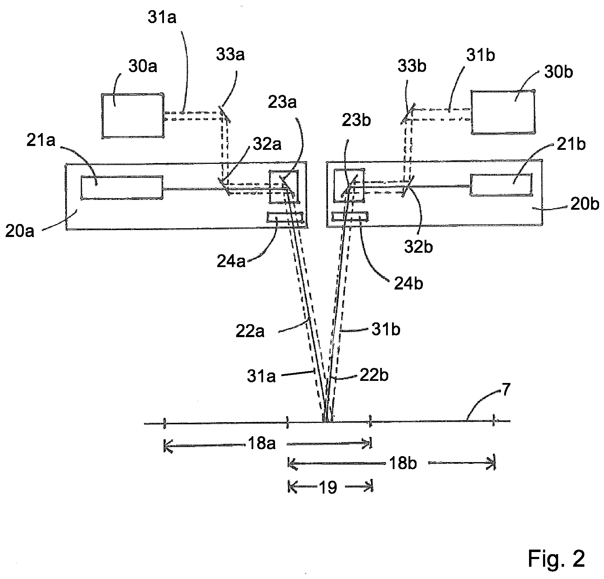

Jeder der beiden Belichtungseinheiten 20a, 20b ist ein Überwachungssensor 30a, 30b (im Folgenden kurz "Sensor" genannt) zugeordnet, der geeignet ist, von der Oberfläche einer aufgebrachten Pulverschicht in der Arbeitsebene 7 ausgesandte oder reflektierte Strahlung 31a, 31b (im folgenden kurz "von der Pulveroberfläche ausgehende Strahlung" genannt) zu erfassen und ein der erfassten Strahlung entsprechendes Ausgangssignal auszugeben. Die von der Pulveroberfläche ausgehende Strahlung folgt vorzugsweise demselben Strahlengang wie die Laserstrahlen 22a, 22b, aber in umgekehrter Richtung, und wird an beliebiger Stelle des Strahlengangs, in der vorliegenden Ausführungsform zwischen Laser 21a, 21b und Scanner 23a, 23b über einen teildurchlässigen Spiegel 32a, 32b abgeleitet und auf den Sensor 30a, 30b gelenkt. Die teildurchlässigen Spiegel 32a, 32b sind dabei so ausgebildet, dass sie die von den Lasern 21a, 21b erzeugten Laserstrahlen 22a, 22b (beispielsweise unsichtbare Infrarotstrahlung) im Wesentlichen verlust- bzw. ablenkungsfrei transmittieren und die von der Auftrefffläche ausgehende Strahlung 31a, 31b (beispielsweise sichtbares Rotlicht aus einer glühenden Metallschmelze) im Wesentlichen verlustfrei zu den Spiegeln 33a, 33b hin ablenken. In dem eigenen Strahlengang der von der Pulveroberfläche ausgehenden Strahlung 31a, 31b können weitere den Strahlengang verändernde optische Elemente angeordnet sein, wie z. B. Linsen und/oder Filter, z. B. ein F-Theta-Objektiv als Fokussiervorrichtung 24a, 24b, und/oder die in Fig. 2 gezeigten Spiegel 33a, 33b.

Der Sensor 30a, 30b ist vorzugsweise ein optischer Sensor zum Erfassen einer elektromagnetischen Strahlung, vorzugsweise im Bereich des sichtbaren Lichts und/oder im Infrarot- und/oder Ultraviolettbereich, wie beispielsweise eine Fotodiode. Er kann auch als ortsauflösender optischer Sensor gebildet sein, beispielsweise als CMOS- oder CCD-Sensor. Weiter bevorzugt ist der Sensor 30a, 30b Teil einer Kamera, die über eine bildverarbeitende Einheit zur Auswertung der Sensordaten verfügen kann.

Schließlich enthält die Lasersintervorrichtung 1 eine Steuereinheit 29, über die die einzelnen Bestandteile der Vorrichtung 1 in koordinierter Weise zum Durchführen des Bauprozesses gesteuert werden. Alternativ kann die Steuereinheit auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer Pulverschicht zunächst der Träger 10 um eine Höhe abgesenkt, die der gewünschten Schichtdicke entspricht. Der Beschichter 16 fährt zunächst zu dem Vorratsbehälter 14 und nimmt aus ihm eine zum Aufbringen einer Schicht ausreichende Menge des Aufbaumaterials 15 auf. Dann fährt er über das Baufeld 8 und bringt dort eine dünne Schicht des pulverförmigen Aufbaumaterials 15 auf die Bauunterlage oder eine bereits vorher vorhandene Pulverschicht auf. Das Aufbringen erfolgt zumindest über den gesamten Querschnitt des herzustellenden Objekts 2, vorzugsweise über das gesamte Baufeld 8, also den durch die Behälterwandung 6 begrenzten Bereich der Arbeitsebene 7. Optional wird das pulverförmige Aufbaumaterial 15 mittels einer Strahlungsheizung 17 auf eine Arbeitstemperatur aufgeheizt. Anschließend wird der Querschnitt des herzustellenden Objekts 2 von den Laserstrahlen 22a, 22b abgetastet (gescannt), wobei das Abtasten der Pulveroberfläche vorzugsweise zumindest abschnittsweise nach einem vorgegebenen Muster erfolgt. Dabei wird das pulverförmige Aufbaumaterial 15 an den Stellen verfestigt, die dem Querschnitt des herzustellenden Objekts 2 entsprechen. Dabei werden die Pulverkörner an diesen Stellen durch die durch die Strahlung eingebrachte Energie teilweise oder vollständig aufgeschmolzen, so dass sie nach einer Abkühlung miteinander verbunden als Festkörper vorliegen. Dabei kann beispielsweise der erste Laserstrahl 22a einen Teil des Objekts verfestigen und der zweite Laserstrahl 22b einen anderen Teil des Objekts. Diese Schritte werden solange wiederholt, bis das Objekt 2 fertiggestellt ist und der Prozesskammer 3 entnommen werden kann. Statt eines Objekts 2 können auch zwei oder mehr Objekte gleichzeitig hergestellt werden. Dabei kann beispielsweise der erste Laserstrahl 22a einen Teil der Objekte verfestigen und der zweite Laserstrahl 22b einen anderen Teil der Objekte, oder beide Laserstrahlen können jeweils verschiedene Bereiche der Objekte verfestigen.

Fig. 2 zeigt schematisch einen Strahlenverlauf in der Lasersintervorrichtung 1. Die erste Belichtungseinheit 20a kann den ersten Laserstrahl 22a auf Stellen innerhalb eines ersten Scanbereichs 18a in der Arbeitsebene 7 richten, und die zweite Belichtungseinheit 20b kann den zweiten Laserstrahl 22b auf Stellen innerhalb eines zweiten Scanbereichs 18b in der Arbeitsebene 7 richten. Die Scanbereiche 18a, 18b überlappen einander in einem Überlappbereich 19, auf welchen beide Laserstrahlen 22a, 22b gerichtet werden können, wobei der Überlappbereich 19 vorzugsweise innerhalb des Baufeldes 8 liegt.

In Fig. 2 werden die Laserstrahlen 22a, 22b, die jeweils durch eine durchgezogene Linie dargestellt sind, derart auf die Arbeitsebene umgelenkt und fokussiert, dass sie im selben Auftreffpunkt beziehungsweise, da dieser auch bei fokussierter Laserstrahlung immer eine zweidimensionale Ausdehnung in der Fläche hat, innerhalb einer gemeinsamen Auftrefffläche auftreffen. Die Auftrefffläche kann eine beliebige Form haben, z. B. eine ovale, kreisförmige, polygonale oder unregelmäßige Form. In der Auftrefffläche kann es zum zumindest teilweisen Aufschmelzen des Aufbaumaterials kommen. Dieses Schmelzbad gibt dann Strahlung u. a. nach oben ab. Von dieser Strahlung wird ein erstes Bündel 31a, das durch eine gestrichelte Doppellinie dargestellt ist, zu dem ersten Sensor 30a geleitet, während ein zweites Bündel 31b, das ebenfalls durch eine gestrichelte Doppellinie dargestellt ist, zu dem zweiten Sensor 30b geleitet wird.

Die Strahlung 31a, 31b folgt somit in umgekehrter Richtung dem Strahlengang der Laserstrahlen 22a, 22b von deren Auftrefffläche in der Arbeitsebene 7 bis hin zu den teildurchlässigen Spiegeln 32a, 32b. Dadurch erfasst der erste Sensor 30a einen ersten Überwachungsbereich in der Arbeitsebene 7, welcher sich auf die Auftrefffläche des ersten Laserstrahles 22a und dessen nähere Umgebung erstreckt. Analog dazu erfasst der zweite Sensor 30b einen zweiten Überwachungsbereich in der Arbeitsebene 7, welcher sich auf die Auftrefffläche des zweiten Laserstrahles 22b und dessen nähere Umgebung erstreckt. Der erste bzw. zweite Überwachungsbereich kann dabei z. B. ein kreisrunder Messfleck mit einem Durchmesser von 10 mm sein. Der von den Sensoren 30a bzw. 30b erfasste Überwachungsbereich ist somit abhängig von der Position der Auftrefffläche des entsprechenden Laserstrahls 22a bzw. 22b.

Um sicherzustellen, dass die beiden Laserstrahlen 22a, 22b bei Ansteuern derselben Auftrefffläche auf die selbe Fläche in der Arbeitsebene 7 fokussiert werden, können die Belichtungseinheiten 20a, 20b kalibriert werden. Der Begriff "Kalibrieren", der im Allgemeinen primär auf Messgeräte angewendet wird, ist im Sinne der vorliegenden Anmeldung analog für eine Vorrichtung zum Herstellen eines dreidimensionalen Objekts zu verstehen. Dabei wird unter "Kalibrieren" verstanden, dass die Abweichung einer tatsächlichen Position (Ist-Position) einer Auftrefffläche eines Laserstrahls in der Arbeitsebene von der gewünschten Position (Soll-Position), auf die der Laserstrahl beispielsweise durch Ansteuern des Scanners gerichtet werden soll, erfasst wird. Aus der Erfassung dieser Abweichung an zumindest einer, vorzugsweise mehr als einer Stelle der Arbeitsebene können Korrekturdaten für die Herstellung des Objekts gewonnen werden. Bei der Herstellung kann dann die Ansteuerung des Scanners mit den Korrekturdaten so korrigiert werden, dass die Ist-Positionen von Auftreffflächen des Laserstrahls möglichst genau mit den Soll-Positionen übereinstimmen. Grundsätzlich kann mittels beweglich gelagerter, d. h. in zwei oder drei Dimensionen verstellbarer Scannereinheiten, eine Scannereinheit durch eine physische Veränderung ihrer Position oder Ausrichtung justiert werden. Eine beispielsweise elektronische Kalibrierung durch geeignete Veränderung von Steuerdaten einer Spiegeleinheit eines Scanners ist jedoch konstruktiv einfach und kostengünstig realisierbar.

Im Sinne der vorliegenden Anmeldung erfolgt dabei eine relative Kalibrierung von zumindest zwei Scannern zueinander. Das bedeutet, dass die Abweichung zwischen den Ist-Positionen der Scanner erfasst wird, wenn beide auf die gleiche Soll-Position gerichtet sind. Die so bezeichnete Ist-Position eines ersten Scanners 23a kann dabei über einen vom Scanner 23a ausgehenden bzw. von einer Spiegeleinheit des Scanners 23a umgelenkten Strahl und eine Position seines Auftreffens auf dem Baufeld 8 und/oder der Arbeitsebene 7 ermittelt werden. Eine Ist-Position, d. h. eine Auftreffposition eines auf die Soll-Position gerichteten Strahls eines zweiten Scanners 23b zeigt dann, ob eine Kalibrierung der beiden Scanner 23a, 23b zueinander durchgeführt werden muss, oder nicht. Für die Ermittlung einer Übereinstimmung oder Nicht-Übereinstimmung von Ist- und Soll-Position, d. h. einer Genauigkeit einer Kalibrierung, kann auch ein vordefinierter Schwellenwert im erfindungsgemäßen Kalibrierungsverfahren berücksichtigt werden, z. B. eine minimale Distanz zweier Auftreffpositionen, und/oder eine z. B. mindestens 90-prozentige Übereinstimmung, die in einer Datenbank konkreten Messwerten zugeordnet ist, wie z. B. einer Schnittmenge von Auftreffflächen zweier von unterschiedlichen Scannern ausgehender Strahlen. Bei der Herstellung des Objekts kann dann die Ansteuerung beider Scanner mit den Korrekturdaten so korrigiert werden, dass ihre Ist-Positionen möglichst genau übereinstimmen, wenn sie auf dieselbe Soll-Position gerichtet sind.

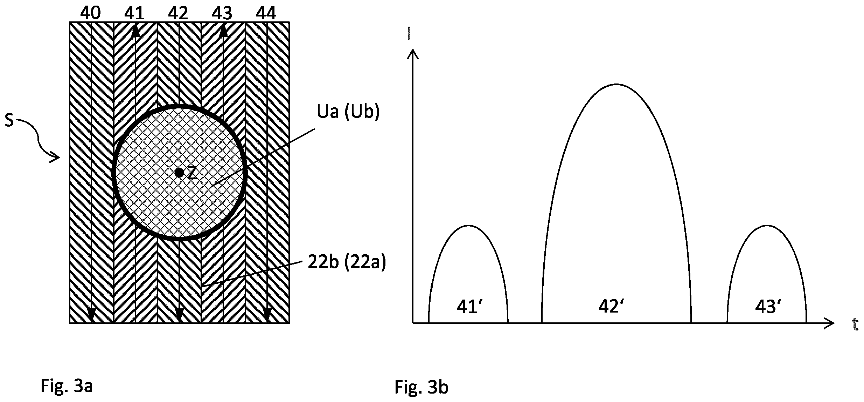

Im Folgenden wird mit Bezug auf Fig. 3a, b eine erste Ausführungsform eines Kalibrierverfahrens für die in Fig. 1 gezeigte Lasersintervorrichtung beschrieben. Dabei bleibt der erste Laser 21a ausgeschaltet, und der erste Scanner 23a wird auf einen Zielpunkt Z im Überlappbereich 19 gerichtet. Somit erfasst der erste Sensor 30a einen ersten Überwachungsbereich Ua mit Mittelpunkt Z. Bei dem in Fig. 3a gezeigten Beispiel ist der erste Überwachungsbereich Ua kreisförmig mit einem vorbestimmten Radius gebildet, umfasst also den Zielpunkt Z des ersten Scanners 23a und dessen nähere Umgebung. Dann wird der zweite Laserstrahl 22b in einem streifenförmigen Wegverlauf S so über das aufgebrachte Pulver geführt, dass seine Spur, d. h. eine Summe seiner Auftreffflächen mehrmals durch den ersten Überwachungsbereich Ua hindurchführt. Bei dem in Fig. 3a gezeigten Beispiel folgt die Auftrefffläche des Laserstrahls 22b einem Muster (Hatch) mit parallelen Linien in gleichem Abstand und abwechselnder Richtung, so dass er den ersten Überwachungsbereich Ua in drei Streckenabschnitten 41, 42, 43 durchläuft. Die aus der seitlichen Ausdehnung der Auftrefffläche resultierende Breite jeder Spur ist in Fig. 3a durch Schraffuren kenntlich gemacht. In Fig. 3 grenzen die Spuren des Schraffurmusters aneinander an, sie können einander aber auch überlappen oder einen Abstand zueinander haben. Eine höhere Zahl von Durchläufen des Belichtungspfades durch die gemessene Fläche bzw. den Messfleck kann dabei die Präzision einer nachfolgenden Kalibrierung erhöhen.

Wenn der zweite Laserstrahl 22b den ersten Überwachungsbereich Ua des ersten Sensors 30a durchläuft, entsteht an den Auftreffflächen des Laserstrahls 22b ein Schmelzbad, welches Strahlung emittiert. Ein erster Teil dieser Strahlung 31a wird von dem ersten Sensor 30a erfasst, und dieser erzeugt ein Ausgangssignal, wie es in Fig. 3b gezeigt ist. Das Ausgangssignal entspricht dabei einem zeitlichen Verlauf der erfassten Intensität der Strahlung 31a. Da der zweite Laserstrahl 22b den ersten Überwachungsbereich Ua wie in Fig. 3a gezeigt in drei Streckenabschnitten 41, 42, 43 durchläuft, registriert der erste Sensor 30a drei Signalausschläge 41', 42', 43' mit unterschiedlichen Intensitätsmaxima, wobei ein Intensitätsmaximum des mittleren Signalausschlags 42' höher ist als die Maxima der beiden anderen Signalausschläge 41', 43'. Die Höhe der in Fig. 3b gezeigten Intensitätsmaxima ist in diesem Beispiel von einer Nähe der Streckenverläufe 41, 42, 43 zu einem Zielpunkt bzw.

Zentrum Z des Überwachungsbereichs bzw. Messflecks Ua abhängig, da eine Empfindlichkeit des verwendeten Sensors 30a vom Zentrum Z der lichtempfindlichen Fläche zu seinen Rändern hin gleichmäßig nachlässt. Bei einer Verwendung eines Sensors mit einer über die Messfläche hinweg konstanten Empfindlichkeit kann sich also ein Verlauf des Ausgangssignals davon unterscheiden.

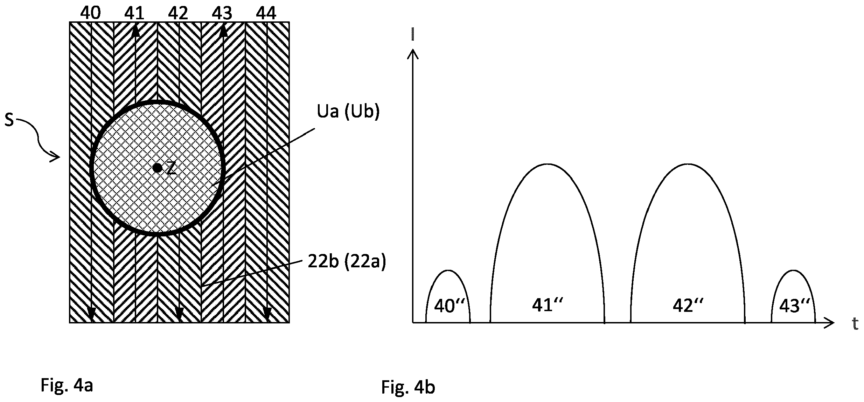

Liegt der Punkt Z nicht, wie in Fig. 3a gezeigt, auf einer Belichtungslinie 42 des zweiten Laserstrahls 22b, so weichen die registrierten Intensitätsmaxima und -minima in ihrer Höhe und/oder ihrem zeitlichen Verlauf von dem in Fig. 3b gezeigten Intensitätsprofil ab. Diesen Fall illustriert Fig. 4a, in welcher der Punkt Z zwischen zwei Belichtungslinien 41 und 42 liegt, also im Vergleich zu Fig. 3a versetzt ist. Der zweite Laserstrahl 22b durchläuft in diesem Beispiel den ersten Überwachungsbereich Ua in vier Streckenabschnitten 40, 41, 42, 43, sodass der erste Sensor 30a, wie aus Fig. 4b ersichtlich, vier Signalausschläge 40", 41", 42', 43" registriert. Dabei sind Intensitätsmaxima der Signalausschläge 41", 42" gleich hoch und zugleich höher als Intensitätsmaxima der Signalausschläge 40", 43". Im Vergleich zu den in Fig. 3b sichtbaren Signalausschlägen sind - bei ansonsten gleichen Bedingungen - die Intensitätsmaxima jeweils geringer, sowohl bei den starken Signalausschlägen 41", 42", als auch bei den schwachen Signalausschlägen 40", 43". Dies erklärt sich durch den Versatz des Punkts Z bzw. der Messfläche des Überwachungsbereichs Ua relativ zum vorliegenden Belichtungsmuster bzw. Wegverlauf S des Laserstrahls 22b.

Nimmt man Fig. 3a/b als Beispiel für eine korrekte Kalibrierung zweier Scanner zueinander, dergemäß Ist- und Soll-Position eines Scanners identisch sind, dann können Fig. 4a/b im Vergleich dazu als Beispiel dafür verwendet werden, wie eine Ist-Position eines Scanners von einer Soll-Position abweicht, indem ein Punkt Z nicht wie gewünscht direkt auf einer Belichtungslinie liegt oder in einem Zentrum einer Belichtungslinie, sondern, z. B. aufgrund von strukturellen Verformungen im Betrieb einer Lasersintervorrichtung, zwischen zwei parallel zueinander verlaufenden Belichtungslinien oder in einem Randbereich einer Belichtungslinie. Aus den registrierten Intensitätsmaxima und - minima in ihrer Höhe und/oder ihrem zeitlichen Verlauf und/oder aus einer Periodendauer und/oder anderen Merkmalen der Signalverläufe kann eine derartige relative Positionsabweichung der beiden Scanner 23a, 23b zueinander ermittelt werden. Diese Ermittlung erfolgt beispielsweise durch Berechnen der Lage der Maxima und/oder Minima und/oder durch Vergleich des Signalverlaufs des Ausgangssignals des ersten Sensors 30a mit gespeicherten Vergleichssignalverläufen. Aus der ermittelten Positionsabweichung können Korrekturwerte bestimmt werden, mit denen die beiden Belichtungseinheiten 20a und 20b, vorzugsweise die beiden Scanner 23a und 23b, so eingestellt werden, dass die Positionsabweichung kompensiert wird. Alternativ oder zusätzlich können die Scanner 23a, 23b solange anhand testweise erzeugter Korrekturwerte relativ zueinander verstellt werden, bis ein Differenzsignal aus Ausgangssignalen von Überwachungseinheiten 30a, 30b beider Scanner 23a, 23b gegen 0 geht.

Das beschriebene Kalibrierverfahren macht es möglich, eine Positionsabweichung der beiden Scanner voneinander auf einfache und schnelle Art und Weise zu erkennen und gegebenenfalls automatisch zu kompensieren. Zudem ermöglicht das Kalibrierverfahren beispielsweise ein Kalibrieren der Scanner nicht nur vor der Herstellung eines dreidimensionalen Objekts, sondern auch jederzeit während dessen Herstellung, bevorzugt mehrfach während dessen Herstellung, wodurch die Genauigkeit des hergestellten Objekts verbessert werden kann, indem beispielsweise durch Temperaturänderungen während der Herstellung bedingte Änderungen erkannt und gegebenenfalls kompensiert werden können.

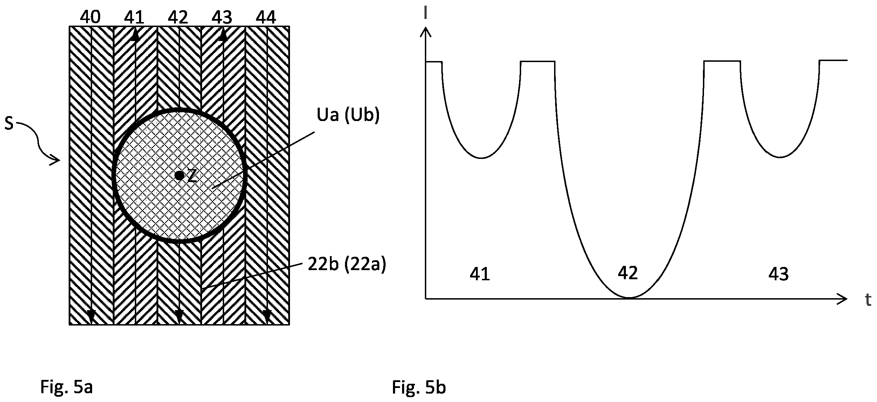

Beim Auftreffen des zweiten Laserstrahls 22b auf die Pulveroberfläche wird ein Schmelzbad erzeugt. Zusätzlich zu dem oben beschriebenen Vorgehen kann dieses Schmelzbad unter Verwendung des dem zweiten Scanner 23b zugeordneten zweiten Sensors 30b überwacht werden. Der Überwachungsbereich des zweiten Sensors umfasst den Zielpunkt Z des zweiten Scanners 23b, also die Auftrefffläche des zweiten Laserstrahls 22b auf die Pulveroberfläche, und dessen nähere Umgebung. Das Ausgangssignal des ersten Sensors 30a kann mit dem des zweiten Sensors 30b verglichen und mit diesem in Beziehung gesetzt werden, beispielsweise auf dessen Pegel normiert werden oder von diesem subtrahiert werden. So zeigt beispielsweise Fig. 5a wie Fig. 3a das Durchfahren des Überwachungsbereichs Ua mittels des Laserstrahls 22b, und Fig. 5b zeigt die Ausgabe eines Differenzsignals aus den Ausgangssignalen der beiden Sensoren 30a, 30b. Dadurch können beispielsweise Störungen des Lichtwegs, wie z. B. eine verminderte Intensität durch Abschattung oder Streuung, die beispielsweise durch von dem Schmelzbad abgegebene Rauche, Dämpfe und/oder Spratzer bewirkt werden, kompensiert werden.

Das Kalibrierverfahren kann auch dergestalt durchgeführt werden, dass zunächst, wie oben beschrieben, bei ausgeschaltetem ersten Laserstrahl 22a der Überwachungsbereich des ersten Sensors 30a durch den zweiten Laserstrahl 22b gescannt wird und anschließend bei ausgeschaltetem zweiten Laserstrahl 22b der Überwachungsbereich des zweiten Sensors 30b durch den ersten Laserstrahl 22a gescannt wird. Durch diese doppelte Messung kann die Genauigkeit der Kalibrierung verbessert werden.

Selbstverständlich können bei allen oben beschriebenen Vorgehensweisen die Rollen von erstem und zweitem Strahl / Scanner / Sensor / Überwachungsbereich / usw. vertauscht sein.

Ferner ist es auch möglich, dass beide Belichtungseinheiten 20a, 20b einen Strahl aussenden und zumindest einer, vorzugsweise beide Sensoren die von der Pulveroberfläche ausgehende Strahlung 31a, 31b erfassen, die eine sichtbare oder unsichtbare Strahlung, z. B. Licht oder Wärme, sein kann.

Das beschriebene Kalibrierverfahren kann einmalig vor dem und/oder während des Bauvorgang(s) durchgeführt werden. Zur kontinuierlichen Überwachung und Nachkalibrierung der Belichtungseinheiten 20a, 20b bzw. der Scanner 23a, 23b zueinander ist es jedoch vorteilhaft, das Kalibrierverfahren wiederholt durchzuführen, beispielsweise in vorbestimmten Zeitabständen, z. B. 1 Sekunde, 1 Minute, oder 1 Stunde, und/oder nach einer vorbestimmten Anzahl von aufgebrachten Schichten, eventuell sogar in jeder Schicht. Ferner kann die Kalibrierung auch in mehreren Bereichen des Überlappbereichs 19 in einer Schicht durchgeführt werden. Werden mehrere Objekte gleichzeitig verfestigt, so kann das Kalibrierverfahren auch nur in Bereichen durchgeführt werden, welche Objekten entsprechen, die von beiden Belichtungseinheiten hergestellt werden.

Das Kalibrieren kann während des Aufbaus eines Objekts an Stellen der jeweils obersten Schicht des Pulverbetts erfolgen, die innerhalb eines Querschnitts des herzustellenden Objekts liegen und daher ohnehin durch den Laserstrahl verfestigt werden sollen. Es kann aber auch an Stellen erfolgen, die außerhalb des Querschnitts des herzustellenden Objekts liegen bzw. gegebenenfalls außerhalb des Baufelds 8 in der Arbeitsebene 7 liegen. Zu diesem Zweck kann/können in dem Überlappungsbereich ein oder mehrere Kalibrierobjekt(e) mitgebaut werden, die lediglich zu Kalibrierzwecken gebaut werden. Das Kalibrierverfahren kann auf die Bereiche innerhalb des Überlappbereichs eingeschränkt sein, die tatsächlich durch beide Scanner belichtet werden.

Bei den oben beschriebenen Verfahren können Abweichungen der Positionen der Auftreffflächen in der Arbeitsebene 7, vorzugsweise im Baufeld 8 erfasst werden, mit anderen Worten in einem zweidimensionalen Bereich. Es ist jedoch auch möglich, das Kalibrierverfahren zum Überprüfen der Fokussierung der Laserstrahlung einzusetzen und/oder ein Verkippen einer Ebene, in der ein Laserstrahl 22a, 22b fokussiert operiert, gegenüber der Arbeitsebene 7 bzw. dem Baufeld 8 festzustellen und auf dieser Basis Abweichungen der Scanner 23a, 23b zueinander zusätzlich in einer dritten Dimension zu korrigieren.

Die Laserstrahlung wird typischerweise so fokussiert, dass eine kreisförmige oder ovale Auftrefffläche innerhalb der Oberfläche der Pulverschicht einen gewünschten Durchmesser hat. In einem fokussierten Zustand des Laserstrahls liegt der in der Umgebung der Arbeitsebene geringste Strahldurchmesser - im Folgenden kurz "Fokuspunkt" genannt - in der Regel im Wesentlichen auf der Pulveroberfläche. Wenn sich nun durch eine Verkippung der Abstand des Fokuspunkts von der Pulveroberfläche ändert, ändert sich auch der Durchmesser der Auftrefffläche des Laserstrahls. Denn bei einer Defokussierung des Laserstrahls liegt eine minimale Querschnittsfläche des Laserstrahls in seinem Verlauf vor oder hinter seiner Auftrefffläche auf dem Baufeld, sodass die Auftrefffläche größer ist als in einem fokussierten Zustand. Dadurch wird die in das Pulver eingetragene Energiedichte geringer, das Pulver wird weniger aufgeheizt, und die Intensität der vom Pulver abgegebenen Strahlung sinkt. Das kann zu einer verringerten Amplitude und zu einer erhöhten Periodenlänge des Ausgangssignals bei ähnlicher Signalform führen.

Führt man ein Verfahren gemäß der ersten Ausführungsform an mehreren Positionen innerhalb des Überlappbereichs 18 durch, bei einem rechteckigen Überlappbereich vorzugsweise nahe den vier Ecken des Überlappbereichs, kann man solche Abstandsänderungen erfassen. Durch Auswertung der Amplituden und/oder Periodenlängen der Ausgangssignale an den verschiedenen Messpunkten kann eine Änderung der Fokuslage und damit ein Verkippen der Belichtungsvorrichtung gegenüber dem Baufeld oder umgekehrt erkannt und gegebenenfalls korrigiert werden.

Während der Überwachungsbereich in der oben beschriebenen ersten Ausführungsform fest ist und von dem Laserstrahl gescannt wird, kann auch der Überwachungsbereich während eines Kalibriervorgangs bewegt werden.

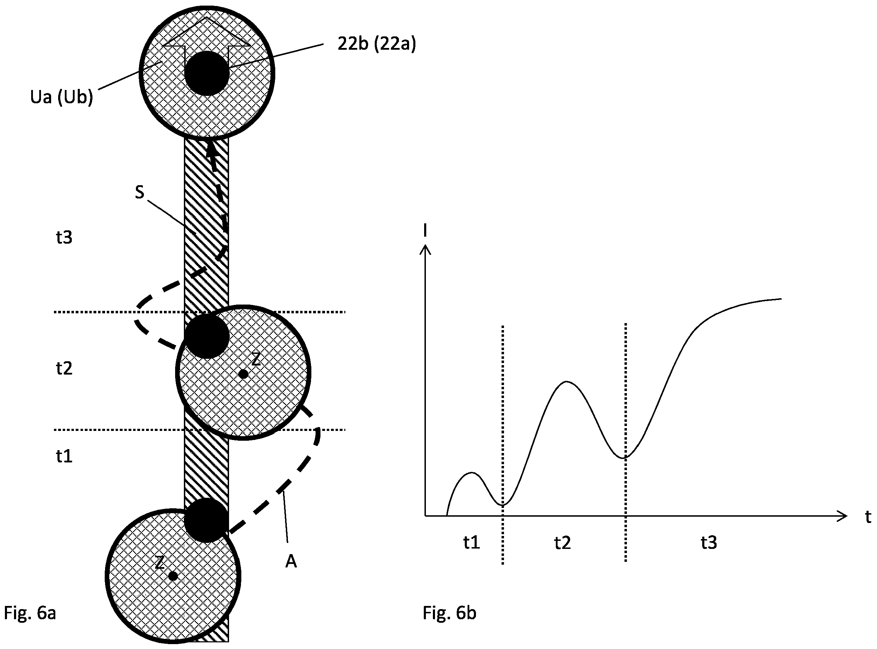

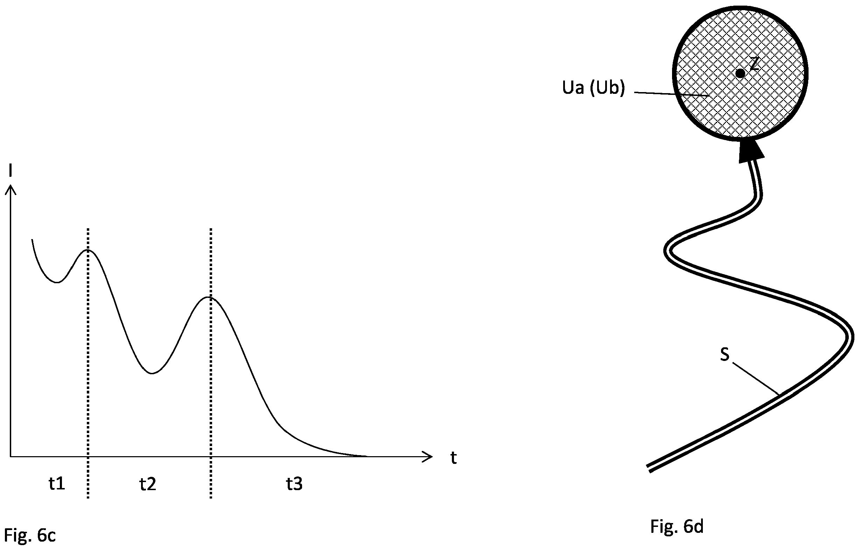

Fig. 6a und 6d zeigen zwei Beispiele für so eine dynamische, fortlaufend durchgeführte Kalibrierung gemäß einer zweiten Ausführungsform. Bei dem in Fig. 6a gezeigten Beispiel wird der Laserstrahl 22b mittels des zweiten Scanners 23b innerhalb des Überlappbereichs 18 in einem Wegverlauf S über die Pulveroberfläche geführt. Der erste Überwachungsbereich Ua wird dieser Bewegung mittels des ersten Scanners 23a so nachgeführt, dass sein Weg den des zweiten Laserstrahls 22b mehrfach kreuzt. Fig. 6b zeigt ein Ausgangssignal des ersten Sensors 30a, wobei Intensitätsmaxima in den Zeitabschnitten t1, t2, t3 in schematischer Weise den in Fig. 6a gezeigten maximalen Annäherungen des Überwachungsbereichs Ua an die Auftrefffläche des Laserstrahls 22b an unterschiedlichen Stellen des Wegverlaufs S, respektive in korrespondierenden Zeitabschnitten t1, t2, t3 entsprechen. Fig. 6c zeigt ein Differenzsignal aus den Ausgangssignalen beider Sensoren 30a, 30b.

Bei dem in Fig. 6d gezeigten Beispiel wird der erste Überwachungsbereich Ua mittels des ersten Scanners 23a innerhalb des Überlappbereichs 18 über die Pulveroberfläche geführt. Der Laserstrahl 22b wird dieser Bewegung mittels des zweiten Scanners 23b so nachgeführt, dass sein Weg den des ersten Überwachungsbereichs Ua mehrfach kreuzt. Die dabei gewonnenen Signale sind ähnlich wie die in Fig. 6b und 6c gezeigten.

Das Auswerten des Ausgangssignals kann wie bei der ersten Ausführungsform beispielsweise durch Bestimmen der Lage der Maxima und/oder Minima oder durch Vergleich der Signalformen mit gespeicherten Vergleichssignalverläufen erfolgen.

Auch in dieser Ausführungsform können die Rollen von erstem und zweitem Scanner vertauscht sein. Die Wege von Laserstrahl und Überwachungsbereich können beliebig gewählt sein, solange sie eine Auswertung ermöglichen, mit denen ein Versatz zwischen den Zielpositionen der beiden Scanner festgestellt werden kann.

Die Merkmale der oben beschriebenen Ausführungsformen können, soweit möglich, miteinander kombiniert werden. So kann beispielsweise auch die Erfassung einer Fokusabweichung gemäß der zweiten Ausführungsform dynamisch durchgeführt werden.

Gemäß den oben beschriebenen Ausführungsformen wird zum Kalibrieren ein Überwachungsbereich auf die Auftrefffläche eines Laserstrahles gerichtet, welcher zum Verfestigen des Aufbaumaterials dient. Es kann jedoch auch ein Laserstrahl verwendet werden, dessen Energie nicht ausreichend ist zum Verfestigen des Aufbaumaterials. Ferner kann auch ein Zielstrahl eines Lasers (z. B. ein Pointerlaser) verwendet werden und/oder eine weitere in den Strahlengang des Lasers eingekoppelte Strahlungsquelle. Falls der verwendete Strahl einem geringfügig anderen Strahlengang folgt als der Laserstrahl, so wird dies in der Auswertung des Ausgangssignals berücksichtigt. Die von der Pulverschicht ausgehende Strahlung ist in diesem Fall keine von einem Schmelzbad ausgesandte Strahlung, sondern eine reflektierte und/oder gestreute Strahlung, die auf die Pulverschicht einfällt.

Eine eventuelle chromatische Aberration der verwendeten optischen Elemente bei gegebenenfalls unterschiedlicher Wellenlänge des auf die Pulveroberfläche auftreffenden Strahls und der daraufhin von der Oberfläche abgehenden Strahlung kann zu unterschiedlicher Brechung der beiden Strahlungsarten durch die optischen Elemente führen, was eine verfälschte Abbildung des von einer Überwachungseinheit beobachteten Belichtungsvorgangs nach sich ziehen kann. Dadurch bewirkte Einflüsse auf das Ausgangssignal des Überwachungssensors können bei der Auswertung des Ausgangssignals beispielsweise per Software kompensiert werden.

In den oben beschriebenen Ausführungsformen erfolgte die Auswertung der Messung anhand eines Ausgangssignals eines oder mehrerer Sensoren, das als elektrisches Signal eine Gesamtintensität der auf den Sensor einfallenden Strahlung wiedergibt. Bei Verwendung zweidimensionaler Bildsensoren wie z.B. von CMOS- oder CCD-Sensoren, die bevorzugt jeweils Teil einer Kamera sind, die über eine bildverarbeitende Einheit zur Auswertung der Sensordaten verfügen kann, gibt es jedoch weitere Auswertungsmöglichkeiten. Dabei kann die Kamera beispielsweise koaxial zu dem Scanner montiert sein, so dass die optische Achse des Scanners der Mittelachse der Kamera entspricht. Eine mit der Bildverarbeitungseinheit gekoppelte Auswerteeinheit kann die Position der Auftrefffläche des Laserstrahls direkt durch eine Lage des Bilds dieser Auftrefffläche auf dem Sensor bzw. auf dem von der Bildverarbeitungseinheit erzeugten Bild ermitteln. Die Positionsauflösung ergibt sich dabei aus dem Abbildungsmaßstab des Bildes der Auftrefffläche und der Auflösung des bildaufnehmenden Sensors. Durch eine solche Auswertung kann der Zeitbedarf für die Kalibrierung verringert und der Kalibriervorgang schneller durchgeführt werden.

Mittels einer Kamera sind aber auch weitere Abwandlungen des Kalibrierverfahrens möglich. Eine Kamera mit Bildverarbeitungs- und Auswerteeinheit kann beispielsweise auch in der Lage sein, Kanten oder andere Strukturen von Bauteilen mit hoher Genauigkeit zu erfassen. Wenn ein erster Scanner in einem Scanüberlappungsbereich einen Teil eines Objekts belichtet hat, könnte eine als Kamera ausgebildete Überwachungseinheit eines zweiten Scanners erkennen, wo der erste Scanner aufgehört hat, und der zweite Scanner könnte direkt daran anschließend weiterbauen.

Mit anderen Worten kann eine Überwachungseinheit eines zweiten Scanners 23b, die einen Verfestigungsvorgang eines ersten Scanners 23a mittels eines Sensors 30b erfasst, z. B. unter Verwendung eines ortsauflösenden Bildsensors mit geeignet feiner Auflösung, überprüfen, ob an einer bereits verfestigten Struktur eines Bauteils in einer obersten Schicht des Aufbaumaterials eine Ist-Position mit einer Soll-Position übereinstimmt. Dazu können als Ist-Positionen beispielsweise Koordinaten einer Kante oder Ecke eines Objekts vom Sensor 30b erfasst, mit korrespondierenden Soll-Positionen, d. h. Koordinaten in Belichtungssteuerdaten, verglichen und gegebenenfalls ein Versatz ermittelt werden. Die Ist-Positionen der bereits verfestigten Struktur können dann für den zweiten Scanner 23b als Soll-Positionen definiert werden und eine Orientierung des Scanners 23b kann mittels Korrekturwerten verändert werden, die zuvor anhand eines Versatzes ermittelt wurden. Eine Orientierung des ersten Scanners 23a kann somit als führend definiert und eine Orientierung des zweiten Scanners 23b daran angeglichen werden. Beispielsweise kann der zweite Scanner 23b einen Bauprozess exakt an einer Stelle eines Bauteils fortführen, an welchen der erste Scanner 23a einen ihm zugewiesenen Anteil des Bauprozesses erfüllt bzw. einen Verfestigungsvorgang beendet hat, obwohl eine Kalibrierung der Scanner 23a, 23b relativ zueinander erst unmittelbar vor einem Beginn des Verfestigens durch den zweiten Scanner 23b erfolgt. Diese Methode besitzt den erheblichen Vorteil, dass auch während eines Bauprozesses eine Kalibrierung zweier oder mehrerer Scanner relativ zueinander durchgeführt werden kann, ohne dass die Qualität eines Bauteils beeinträchtigt wird, oder ein laufender Bauprozess abgebrochen wird, oder ein erheblicher Zeitverlust auftritt.

Falls die beiden Scanner also zueinander kalibriert werden müssen, könnte eine Kalibrierung derart stattfinden, dass der zweite Scanner bereits vom ersten Scanner verfestigte Strukturen erkennt und als vorgegeben annimmt und somit nach dem Maßstab des ersten Scanners elektronisch oder mechanisch nachjustiert wird.

Die oben beispielhaft beschriebene Lasersintervorrichtung umfasst zwei Belichtungseinheiten, wobei jede Belichtungseinheit einen Laser enthält. Es kann jedoch auch eine Belichtungsvorrichtung mit lediglich einem Laser vorgesehen sein, wobei der Laserstrahl dann beispielsweise über einen Strahlteiler auf zwei separat steuerbare Scanner umgelenkt wird, so dass die Belichtungsvorrichtung in der Lage ist, zwei separat steuerbare Laserstrahlen zu erzeugen. Die Sensoren 30a, 30b sind dann den entsprechenden Scannern zugeordnet.

Ferner kann die Lasersintervorrichtung auch mehr als zwei Belichtungseinheiten und/oder Scanner enthalten. Dabei kann jedem Scanner ein Scanbereich zugeordnet werden, wobei die Scanbereiche einander in einem oder mehreren Überlappbereichen überlappen können. Jeder Überlappbereich kann also von mindestens zwei, aber evtl. auch drei oder mehr Lasern belichtet werden. Zumindest einer, bevorzugt jeder Belichtungseinheit bzw. zumindest einem, bevorzugt jedem Scanner ist ein Sensor zugeordnet.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum generativen Herstellen eines dreidimensionalen Objektes durch schichtweises Aufbringen und selektives Verfestigen eines Aufbaumaterials durch Abtasten mit einem Energiestrahl angewendet werden.

Der Belichter kann beispielsweise einen oder mehrere Gas- oder Festkörperlaser oder jede andere Art von Laser wie z. B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann als Belichter jede Einrichtung verwendet werden, mit der Energie als Wellen- oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen.

Als Aufbaumaterial können verschiedene Materialien verwendet werden, vorzugsweise Pulver, insbesondere Metallpulver, Kunststoffpulver, Keramikpulver, Sand, gefüllte oder gemischte Pulver.

## Patentansprüche

1. Kalibrierverfahren zum Kalibrieren einer Herstellvorrichtung (1) zum generativen Herstellen eines dreidimensionalen Objekts (2) durch schichtweises Aufbringen und selektives Verfestigen eines Aufbaumaterials (15), vorzugsweise eines Pulvers, innerhalb eines in einer Arbeitsebene (7) liegenden Baufelds (8),
wobei die Herstellvorrichtung (1) zumindest zwei Scaneinheiten (23a, 23b) aufweist, von denen jede in der Lage ist, einen Strahl (22a, 22b) auf verschiedene Zielpunkte auf der Arbeitsebene (7), vorzugsweise auf dem Baufeld (8) zu richten, die innerhalb eines der jeweiligen Scaneinheit (23a, 23b) zugeordneten Scanbereichs (18a, 18b) liegen, wobei die Scanbereiche (18a, 18b) der zumindest zwei Scaneinheiten (23a, 23b) einander in einem Überlappbereich (19) überlappen,
wobei zumindest einer ersten der zumindest zwei Scaneinheiten (23a) eine erste Überwachungseinheit (30a) zugeordnet wird, deren Überwachungsbereich (Ua) sich auf einen Zielpunkt der ersten Scaneinheit (23a) und dessen nähere Umgebung erstreckt, wobei eine Änderung einer Position des Überwachungsbereichs (Ua) in Abhängigkeit von einer Änderung einer Position des Zielpunkts durchgeführt wird,
wobei das Kalibrierverfahren die folgenden Schritte aufweist:
Richten des Überwachungsbereichs (Ua) der ersten Überwachungseinheit (30a) auf einen Bereich in dem Überlappbereich (19), ohne dass von der ersten Scaneinheit (23a) ein Strahl (22a) ausgeht,
Bestrahlen zumindest eines Teils des Überwachungsbereichs (Ua) der ersten Überwachungseinheit (30a) mit einem Strahl (22b) über eine zweite der zumindest zwei Scaneinheiten (23b), und
Auswerten eines Ausgangssignals der ersten Überwachungseinheit (30a).

2. Kalibrierverfahren gemäß Anspruch 1, bei dem
der zweiten Scaneinheit (23b) eine zweite Überwachungseinheit (30b) zugeordnet wird, deren Überwachungsbereich sich auf einen Zielpunkt der zweiten Scaneinheit (23b) und dessen nähere Umgebung erstreckt, wobei eine Änderung einer Position des Überwachungsbereichs der zweiten Überwachungseinheit (30b) in Abhängigkeit von einer Änderung einer Position des Zielpunkts der zweiten Scaneinheit (23b) durchgeführt wird, und
das Kalibrierverfahren einen Schritt des Auswertens eines Ausgangssignals der zweiten Überwachungseinheit (30b) aufweist.

3. Kalibrierverfahren gemäß Anspruch 1 oder 2, bei dem
der zweiten Scaneinheit (23b) eine zweite Überwachungseinheit (30b) zugeordnet wird, deren Überwachungsbereich sich auf einen Zielpunkt der zweiten Scaneinheit (23b) und dessen nähere Umgebung erstreckt, wobei eine Änderung einer Position des Überwachungsbereichs der zweiten Überwachungseinheit (30b) in Abhängigkeit von einer Änderung einer Position des Zielpunkts der zweiten Scaneinheit (23b) durchgeführt wird, und
das Kalibrierverfahren die folgenden Schritte aufweist:
Richten des Überwachungsbereichs der zweiten Überwachungseinheit (30b) auf einen Bereich in dem Überlappbereich (19), ohne dass von der zweiten Scaneinheit (23b) ein Strahl (22b) ausgeht,
Bestrahlen zumindest eines Teils des Überwachungsbereichs der zweiten Überwachungseinheit (30b) mit einem Strahl (22a) über die erste Scaneinheit (23a), und
Auswerten eines Ausgangssignals der zweiten Überwachungseinheit (30b).

4. Kalibrierverfahren gemäß einem der Ansprüche 1 bis 3, bei dem
der Überwachungsbereich (Ua) der ersten Überwachungseinheit (30a) auf den Zielpunkt der ersten Scaneinheit (23a) und dessen nähere Umgebung begrenzt wird und/oder
der Überwachungsbereich (Ub) der zweiten Überwachungseinheit (30b) auf den Zielpunkt der zweiten Scaneinheit (23b) und dessen nähere Umgebung begrenzt wird.

5. Kalibrierverfahren gemäß einem der Ansprüche 1 bis 4, bei dem
der Strahl (22a, 22b) einer Scaneinheit (23a, 23b) ein Strahl einer zum Verfestigen des Aufbaumaterials geeigneten Strahlung ist, vorzugsweise einer Laserstrahlung, und/oder
der Strahl (22a, 22b) einer Scaneinheit (23a, 23b) ein Zielstrahl ist und/oder ein Laserstrahl, dessen Energie nicht zum Verfestigen des Aufbaumaterials (15) ausreicht.

6. Kalibrierverfahren gemäß einem der Ansprüche 1 bis 5, bei dem
das Bestrahlen des Überwachungsbereichs (Ua, Ub) der einer Scaneinheit (23a, 23b) zugeordneten Überwachungseinheit (30a, 30b) mit dem Strahl (22a, 22b) einer jeweils anderen Scaneinheit (23a, 23b) in Form eines Scannens erfolgt,
wobei das Scannen vorzugsweise nach einem vorbestimmten Muster durchgeführt wird.

7. Kalibrierverfahren gemäß einem der Ansprüche 1 bis 6, bei dem
das Auswerten des Ausgangssignals das Bestimmen eines Extremwerts des Ausgangssignals und/oder das Vergleichen eines Signalverlaufs des Ausgangssignals mit einem vorbestimmten Vergleichsmuster enthält.

8. Kalibrierverfahren gemäß einem der Ansprüche 1 bis 7, bei dem
das Kalibrierverfahren für mehr als einen Bereich in dem Überlappbereich (18) durchgeführt wird und/oder
das Kalibrierverfahren mehrmals hintereinander durchgeführt wird, vorzugsweise in vorbestimmten Zeitabständen und/oder nach einer vorbestimmten Anzahl von aufgebrachten Schichten, in weiter bevorzugter Weise in jeder Schicht, und/oder
das Kalibrierverfahren dynamisch durchgeführt wird, indem der Strahl (22a, 22b) einer Scaneinheit (23a, 23b) über die Arbeitsebene (7), vorzugsweise das Baufeld (8) bewegt wird und der Überwachungsbereich (Ub, Ua) einer einer jeweils anderen Scaneinheit (23b, 23a) zugeordneten Überwachungseinheit (30b, 30a) dieser Bewegung nachgeführt wird und/oder der Überwachungsbereich (Ua, Ub) einer einer Scaneinheit (23a, 23b) zugeordneten Überwachungseinheit (30a, 30b) über die Arbeitsebene (7), vorzugsweise das Baufeld (8) bewegt wird und der Strahl (22b, 22a) einer jeweils anderen Scaneinheit (23b, 23a) dieser Bewegung nachgeführt wird.

9. Kalibrierverfahren gemäß einem der Ansprüche 1 bis 8, bei dem
ein Strahlengang einer zum Überwachen des Überwachungsbereichs (Ua, Ub) einer Überwachungseinheit (30a, 30b) dienenden Strahlung (31a, 31b) zumindest abschnittsweise umgekehrt gleich einem Strahlengang eines Strahls (22a, 22b) einer zum Verfestigen des Aufbaumaterials (15) geeigneten Strahlung und/oder eines Zielstrahls und/oder eines Laserstrahls, dessen Energie nicht zum Verfestigen des Aufbaumaterials ausreicht, ist.

10. Kalibrierverfahren gemäß einem der Ansprüche 1 bis 9, bei dem
aus der Auswertung des Ausgangssignals Korrekturdaten für eine Positionierung zumindest eines der Strahlen (22a, 22b) ermittelt werden,
wobei bei der Ermittlung der Korrekturdaten vorzugsweise ein Unterschied zwischen einer Wellenlänge einer zum Überwachen des Überwachungsbereichs einer Überwachungseinheit dienenden Strahlung und einer Wellenlänge einer zum Verfestigen des Aufbaumaterials geeigneten Strahlung und/oder eines Zielstrahls und/oder eines Laserstrahls, dessen Energie nicht zum Verfestigen des Aufbaumaterials ausreicht, berücksichtigt wird.

11. Herstellverfahren zum generativen Herstellen eines dreidimensionalen Objekts (2) durch schichtweises Aufbringen und selektives Verfestigen eines Aufbaumaterials (15), vorzugsweise eines Pulvers, mit den Schritten
Aufbringen einer Schicht des Aufbaumaterials (15) auf ein in einer Arbeitsebene (7) liegendes Baufeld (8),
Verfestigen der Schicht des Aufbaumaterials an dem jeweiligen Querschnitt des Objekts (2) entsprechenden Stellen durch selektives Bestrahlen innerhalb des Baufelds (8) mit zumindest zwei Strahlen (22a, 22b) einer zur Verfestigung des Aufbaumaterials (15) geeigneten Strahlung, vorzugsweise einer Laserstrahlung, und
Wiederholen der Schritte des Aufbringens und des Verfestigens, bis das dreidimensionale Objekt (2) fertiggestellt ist,
wobei zumindest einmal vor dem Herstellverfahren und/oder während des Herstellverfahrens ein Kalibrierverfahren gemäß einem der Ansprüche 1 bis 10 durchgeführt wird.

12. Computerprogramm, das in eine programmierbare Steuereinheit (29) ladbar ist, mit Programmcodemitteln, um alle Schritte eines Kalibrierverfahrens gemäß einem der Ansprüche 1 bis 10 und/oder eines Herstellverfahrens gemäß Anspruch 11 auszuführen, wenn das Computerprogramm auf der Steuereinheit ausgeführt wird.

13. Steuereinrichtung für eine Herstellvorrichtung (1) zum generativen Herstellen eines dreidimensionalen Objekts (2) durch schichtweises Aufbringen und selektives Verfestigen eines Aufbaumaterials (15), vorzugsweise eines Pulvers, wobei die Herstellvorrichtung (1) enthält:
einen Beschichter (16) zum Aufbringen einer Schicht des Aufbaumaterials (15) auf ein in einer Arbeitsebene (7) liegendes Baufeld (8) und
zumindest zwei Scaneinheiten (23a, 23b), von denen jede in der Lage ist, einen Strahl (22a, 22b) auf verschiedene Zielpunkte auf der Arbeitsebene (7), vorzugsweise auf dem Baufeld (8) zu richten, die innerhalb eines der jeweiligen Scaneinheit (23a, 23b) zugeordneten Scanbereichs (18a, 18b) liegen, wobei die Scanbereiche (18a, 18b) der zumindest zwei Scaneinheiten (23a, 23b) einander in einem Überlappbereich (19) überlappen,
wobei zumindest einer ersten (23a) der zumindest zwei Scaneinheiten zumindest eine Überwachungseinheit (30a) zugeordnet ist, deren Überwachungsbereich (Ua) sich auf einen Zielpunkt der ersten Scaneinheit (23a) und dessen nähere Umgebung erstreckt, wobei eine Änderung einer Position des Überwachungsbereichs (Ua) in Abhängigkeit von einer Änderung einer Position des Zielpunkts durchgeführt wird,
wobei die Steuereinheit (29) ausgebildet ist, die Herstellvorrichtung (1) so zu steuern, dass sie:
die Schritte des Aufbringens und des selektiven Verfestigens wiederholt, bis das Objekt (2) fertiggestellt ist, und
zumindest einmal vor und/oder während des Herstellens des Objekts (2) ein Kalibrierverfahren gemäß einem der Ansprüche 1 bis 10 durchführt.

14. Herstellvorrichtung (1) zum generativen Herstellen eines dreidimensionalen Objekts (2) durch schichtweises Aufbringen und selektives Verfestigen eines Aufbaumaterials (15), vorzugsweise eines Pulvers, enthaltend:
einen Beschichter (16) zum Aufbringen einer Schicht des Aufbaumaterials (15) auf ein in einer Arbeitsebene (7) liegendes Baufeld (8) und
zumindest zwei Scaneinheiten (23a, 23b), von denen jede in der Lage ist, einen Strahl (22a, 22b) auf verschiedene Zielpunkte auf der Arbeitsebene (7), vorzugsweise auf dem Baufeld (8) zu richten, die innerhalb eines einer jeweiligen Scaneinheit (23a, 23b) zugeordneten Scanbereichs (18a, 18b) liegen, wobei die Scanbereiche (18a, 18b) der zumindest zwei Scaneinheiten (23a, 23b) einander in einem Überlappbereich (19) überlappen,
wobei zumindest einer ersten (23a) der zumindest zwei Scaneinheiten zumindest eine Überwachungseinheit (30a) zugeordnet wird, deren Überwachungsbereich (Ua) sich auf einen Zielpunkt der ersten Scaneinheit (23a) und dessen nähere Umgebung erstreckt, wobei eine Änderung einer Position des Überwachungsbereichs (Ua) in Abhängigkeit von einer Änderung einer Position des Zielpunkts durchgeführt wird,
wobei die Herstellvorrichtung (1) ausgebildet und/oder gesteuert ist:
die Schritte des Aufbringens und des selektiven Verfestigens zu wiederholen, bis das Objekt (2) fertiggestellt ist, und
zumindest einmal vor und/oder während des Herstellens des Objekts (2) ein Kalibrierverfahren gemäß einem der Ansprüche 1 bis 10 durchzuführen.

15. Herstellvorrichtung gemäß Anspruch 14, bei der die Überwachungseinheit (30a, 30b) einen optischen Sensor enthält,
wobei der optische Sensor vorzugsweise eine Fotodiode und/oder einen ortsauflösenden optischen Sensor enthält, vorzugsweise einen CMOS- oder CCD-Sensor,
wobei die Überwachungseinheit (30a, 30b) in weiter bevorzugter Weise als Kamera ausgebildet ist.

## Claims

1. A calibration method for calibrating a manufacturing device (1) for additively producing a three-dimensional object (2) by applying layer by layer and selectively solidifying a building material (15), preferably a powder, within a build area (8) in a working plane (7),
wherein the manufacturing device (1) comprises at least two scanning units (23a, 23b), each of which is capable of directing a beam (22a, 22b) to different target points in the working plane (7), preferably in the build area (8), which are located within a scanning region (18a, 18b) assigned to the respective scanning unit (23a, 23b), wherein the scanning regions region (18a, 18b) of the at least two scanning units (23a, 23b) overlap in an overlap area (19),
wherein at least a first of the at least two scanning units (23a) is assigned a first monitoring unit (30a) whose monitoring region (Ua) extends to a target point of the first scanning unit (23a) and its proximity, wherein a change of a position of the monitoring region (Ua) is carried out as a function of a change of a position of the target point,
wherein the calibration method comprises the following steps:
directing the monitoring region (Ua) of the first monitoring unit (30a) to a region in the overlap area (19) without a beam (22a) emanating from the first scanning unit (23a),
irradiating at least a portion of the monitoring region (Ua) of the first monitoring unit (30a) with a beam (22b) via a second of the at least two scanning units (23b), and
evaluating an output signal of the first monitoring unit (30a).

2. Calibration method according to claim 1, wherein
the second scanning unit (23b) is assigned a second monitoring unit (30b) whose monitoring region extends to a target point of the second scanning unit (23b) and its proximity, wherein a change of a position of the monitoring region of the second monitoring unit (30b) is carried out as a function of a change of a position of the target point of the second scanning unit (23b), and
the calibration method comprises a step of evaluating an output signal of the second monitoring unit (30b).

3. Calibration method according to claim 1 or 2, wherein
the second scanning unit (23b) is assigned a second monitoring unit (30b) whose monitoring region extends to a target point of the second scanning unit (23b) and its proximity, wherein a change of a position of the monitoring region of the second monitoring unit (30b) is carried out as a function of a change of a position of the target point of the second scanning unit (23b), and
the calibration method comprises the following steps:
directing the monitoring region of the second monitoring unit (30b) to an area within the overlap area (19) without a beam (22b) emanating from the second scanning unit (23b),
irradiating at least a portion of the monitoring region of the second monitoring unit (30b) with a beam (22a) via the first scanning unit (23a), and
evaluating an output signal of the second monitoring unit (30b).

4. Calibration method according to one of claims 1 to 3, wherein
the monitoring region (Ua) of the first monitoring unit (30a) is limited to the target point of the first scanning unit (23a) and its proximity and/or
the monitoring region (Ub) of the second monitoring unit (30b) is limited to the target point of the second scanning unit (23b) and its proximity

5. Calibration method according to one of claims 1 to 4, wherein
the beam (22a, 22b) of a scanning unit (23a, 23b) is a beam of a radiation suited for solidifying the building material, preferably laser radiation, and/or
the beam (22a, 22b) of a scanning unit (23a, 23b) is a target beam and/or a laser beam whose energy is not sufficient to solidify the building material (15).

6. Calibration method according to one of claims 1 to 5, wherein
the monitoring region (Ua, Ub) of the monitoring unit (30a, 30b) assigned to a scanning unit (23a, 23b) is irradiated by the beam (22a, 22b) of a different scanning unit (23a, 23b) in the form of scanning,
wherein said scanning is implemented preferably according to a predetermined pattern.

7. Calibration method according to one of claims 1 to 6, wherein
the evaluation of the output signal includes determining an extreme value of the output signal and/or comparing a signal curve of the output signal with a predetermined comparison pattern.

8. Calibration method according to one of claims 1 to 7, wherein
the calibration method is carried out for more than one region in the overlap area (18) and/or
the calibration method is carried out several times in succession, preferably at predetermined time intervals and/or after a predetermined number of applied layers, further preferred in each layer, and/or
the calibration method is carried out dynamically by moving the beam (22a, 22b) of a scanning unit (23a, 23b) across the working plane (7), preferably the build area (8), and the monitoring region (Ub, Ua) of a monitoring unit (30b, 30a) assigned to a different scanning unit (23b, 23a) following said movement and/or by moving the monitoring region (Ua, Ub) of a monitoring unit (30a, 30b) assigned to a scanning unit (23a, 23b) across the working plane (7), preferably the build area (8), and the beam (22b, 22a) of a different scanning unit (23b, 23a) following said movement.

9. Calibration method according to one of claims 1 to 8, wherein
a beam path of a radiation (31a, 31b) for monitoring the monitoring region (Ua, Ub) of a monitoring unit (30a, 30b) is at least within a section thereof the same in a reversed direction as a beam path of a beam (22a, 22b) of a radiation suited to solidify the building material (15) and/or of a target beam and/or of a laser beam whose energy is not sufficient to solidify the building material.

10. Calibration method according to one of claims 1 to 9, wherein
correction data for positioning at least one of the beams (22a, 22b) is determined from the evaluation of the output signal,
wherein a difference between a wavelength of a radiation used for monitoring the monitoring region of a monitoring unit and a wavelength of a radiation suited for solidifying the building material and/or a target beam and/or a laser beam whose energy is not sufficient to solidify the building material is preferably incorporated for determining said correction data.

11. A production method for additively producing a three-dimensional object (2) by applying layer by layer and selectively solidifying a building material (15), preferably a powder, comprising the steps
applying a layer of the building material (15) in a build area (8) within a working plane (7),
solidifying the layer of the building material at positions that correspond to the respective cross-section of the object (2) by selective irradiation within the build area (8) by at least two beams (22a, 22b) of a radiation suited for solidifying the building material (15), preferably a laser radiation, and
repeating the steps of applying and solidifying until the three-dimensional object (2) is completed,
wherein a calibration method according to one of claims 1 to 10 is carried out at least once before the building process and/or during the building process.

12. A Computer program which can be loaded into a programmable control unit (29) which comprises program code means for executing all the steps of a calibration method according to one of claims 1 to 10 and/or a production method according to claim 11 when the computer program is executed on the control unit.

13. A control device for a manufacturing device (1) for additively producing a three-dimensional object (2) by applying layer by layer and selectively solidifying a building material (15), preferably a powder, wherein the manufacturing device comprises:
an application device (16) for applying a layer of the building material (15) to a build area (8) within a working plane (7) and
at least two scanning units (23a, 23b), each of them being configured to direct a beam (22a, 22b) to different target points in the working plane (7), preferably in the build area (8), which target points are located within a scanning region (18a, 18b) assigned to a respective scanning unit (23a, 23b), wherein the scanning regions (18a, 18b) of the at least two scanning units (23a, 23b) overlap in an overlap area (19),
wherein at least a first (23a) of the at least two scanning units is assigned at least one monitoring unit (30a) whose monitoring region (Ua) extends to a target point of the first scanning unit (23a) and its proximity, wherein a change of a position of the monitoring region (Ua) is carried out as a function of a change of a position of the target point,
wherein the control unit (29) is configured to control the manufacturing device (1) such that it:
repeats the steps of applying and selectively solidifying until the object (2) is completed and
that it carries out a calibration method according to one of claims 1 to 10 at least once before and/or during building of the object (2).

14. A manufacturing device (1) for additively producing a three-dimensional object (2) by applying layer by layer and selectively solidifying a building material (15), preferably a powder, comprises
an application device (16) for applying a layer of the building material (15) to a build area (8) within a working plane (7) and
at least two scanning units (23a, 23b), each of them being configured to direct a beam (22a, 22b) to different target points in the working plane (7), preferably in the build area (8), which target points are located within a scanning region (18a, 18b) assigned to a respective scanning unit (23a, 23b), wherein the scanning regions (18a, 18b) of the at least two scanning units (23a, 23b) overlap in an overlap area (19),
wherein at least a first (23a) of the at least two scanning units is assigned at least one monitoring unit (30a) whose monitoring region (Ua) extends to a target point of the first scanning unit (23a) and its proximity, wherein a change of a position of the monitoring region (Ua) is carried out as a function of a change of a position of the target point,
wherein the manufacturing device is configured and/or controlled such that:
it repeats the steps of applying and selectively solidifying until the object (2) is completed and
that it carries out a calibration method according to one of claims 1 to 10 at least once before and/or during building of the object (2).

15. Manufacturing device according to claim 14, wherein the monitoring unit (30a, 30b) comprises an optical sensor,
wherein the optical sensor preferably comprises a photodiode and/or an optical sensor adapted for spatial resolution, preferably a CMOS or CCD sensor,
wherein further preferred, the monitoring unit (30a, 30b) is designed as a camera.

## Revendications

1. Procédé d'étalonnage pour l'étalonnage d'un dispositif de fabrication (1) pour la fabrication additive d'un objet (2) tridimensionnel par application couche par couche et solidification sélective d'un matériau de construction (15), de préférence d'une poudre, à l'intérieur d'un champ de construction (8) se situant dans un plan de travail (7),
dans lequel le dispositif de fabrication (1) présente au moins deux unités de balayage (23a, 23b), dont chacune est en mesure de diriger un rayon (22a, 22b) sur différents points cibles sur le plan de travail (7), de préférence sur le champ de construction (8), qui se situent à l'intérieur d'une zone de balayage (18a, 18b) associée à l'unité de balayage (23a, 23b) respective, dans lequel les zones de balayage (18a, 18b) des au moins deux unités de balayage (23a, 23b) se chevauchent mutuellement dans une zone de chevauchement (19),
dans lequel une première unité de surveillance (30a), dont la zone de surveillance (Ua) s'étend sur un point cible de la première unité de balayage (23a) et l'environnement proche de celui-ci, est associée à au moins une première des au moins deux unités de balayage (23a), dans lequel une modification d'une position de la zone de surveillance (Ua) est réalisée en fonction d'une modification d'une position du point cible,
dans lequel le procédé d'étalonnage présente les étapes suivantes consistant à :
diriger la zone de surveillance (Ua) de la première unité de surveillance (30a) sur une zone dans la zone de chevauchement (19), sans qu'un rayon (22a) ne parte de la première unité de balayage (23a),
irradier au moins une partie de la zone de surveillance (Ua) de la première unité de surveillance (30a) avec un rayon (22b) par l'intermédiaire d'une deuxième des au moins deux unités de balayage (23b), et
évaluer un signal de sortie de la première unité de surveillance (30a).

2. Procédé d'étalonnage selon la revendication 1, selon lequel
une deuxième unité de surveillance (30b), dont la zone de surveillance s'étend sur un point cible de la deuxième unité de balayage (23b) et l'environnement proche de celui-ci, est associée à la deuxième unité de balayage (23b), dans lequel une modification d'une position de la zone de surveillance de la deuxième unité de surveillance (30b) est réalisée en fonction d'une modification d'une position du point cible de la deuxième unité de balayage (23b), et
le procédé d'étalonnage présente une étape d'évaluation d'un signal de sortie de la deuxième unité de surveillance (30b).

3. Procédé d'étalonnage selon la revendication 1 ou 2, selon lequel
une deuxième unité de surveillance (30b), dont la zone de surveillance s'étend sur un point cible de la deuxième unité de balayage (23b) et l'environnement proche de celui-ci, est associée à la deuxième unité de balayage (23b), dans lequel une modification d'une position de la zone de surveillance de la deuxième unité de surveillance (30b) est réalisée en fonction d'une modification d'une position du point cible de la deuxième unité de balayage (23b), et
le procédé d'étalonnage présente les étapes suivantes consistant à :
diriger la zone de surveillance de la deuxième unité de surveillance (30b) sur une zone dans la zone de chevauchement (19), sans qu'un rayon (22b) ne parte de la deuxième unité de balayage (23b),
irradier au moins une partie de la zone de surveillance de la deuxième unité de surveillance (30b) avec un rayon (22a) par l'intermédiaire de la première unité de balayage (23a), et
évaluer un signal de sortie de la deuxième unité de surveillance (30b).

4. Procédé d'étalonnage selon l'une quelconque des revendications 1 à 3, selon lequel
la zone de surveillance (Ua) de la première unité de surveillance (30a) est délimitée sur le point cible de la première unité de balayage (23a) et l'environnement proche de celui-ci et/ou
la zone de surveillance (Ub) de la deuxième unité de surveillance (30b) est délimitée sur le point cible de la deuxième unité de balayage (23b) et l'environnement proche de celui-ci.

5. Procédé d'étalonnage selon l'une quelconque des revendications 1 à 4, selon lequel
le rayon (22a, 22b) d'une unité de balayage (23a, 23b) est un rayon d'un rayonnement, de préférence d'un rayonnement laser, adapté à solidifier le matériau de construction, et/ou
le rayon (22a, 22b) d'une unité de balayage (23a, 23b) est un rayon cible et/ou un rayon laser dont l'énergie ne suffit pas à solidifier le matériau de construction (15).

6. Procédé d'étalonnage selon l'une quelconque des revendications 1 à 5, selon lequel
l'irradiation de la zone de surveillance (Ua, Ub) de l'unité de surveillance (30a, 30b) associée à une unité de balayage (23a, 23b) s'effectue sous forme d'un balayage avec le rayon (22a, 22b) d'une autre unité de balayage (23a, 23b) respective,
dans lequel le balayage est réalisé de préférence selon un modèle prédéfini.

7. Procédé d'étalonnage selon l'une quelconque des revendications 1 à 6, selon lequel
l'évaluation du signal de sortie contient la détermination d'une valeur extrême du signal de sortie et/ou la comparaison d'une variation de signal du signal de sortie à un modèle de comparaison prédéfini.

8. Procédé d'étalonnage selon l'une quelconque des revendications 1 à 7, selon lequel
le procédé d'étalonnage est réalisé pour plus d'une zone dans la zone de chevauchement (18) et/ou
le procédé d'étalonnage est réalisé plusieurs fois de suite, de préférence à intervalles prédéfinis et/ou après un nombre prédéfini de couches appliquées, plus préférablement dans chaque couche, et/ou
le procédé d'étalonnage est réalisé de manière dynamique, du fait que le rayon (22a, 22b) d'une unité de balayage (23a, 23b) est déplacé au-dessus du plan de travail (7), de préférence le champ de construction (8), et la zone de surveillance (Ub, Ua) d'une unité de surveillance (30a, 30b) associée à une autre unité de balayage (23a, 23b) respective est contrainte de suivre ce déplacement et/ou la zone de surveillance (Ua, Ub) d'une unité de surveillance (30a, 30b) associée à une unité de balayage (23a, 23b) est déplacée au-dessus du plan de travail (7), de préférence le champ de construction (8), et le rayon (22b, 22a) d'une autre unité de balayage (23a, 23b) respective est contraint de suivre ce déplacement.

9. Procédé d'étalonnage selon l'une quelconque des revendications 1 à 8, selon lequel
une trajectoire d'un rayonnement (31a, 31b) servant à surveiller la zone de surveillance (Ua, Ub) d'une unité de surveillance (30a, 30b) est au moins sur certaines parties inversement identique à une trajectoire d'un rayon (22a, 22b) d'un rayonnement et/ou d'un rayon cible et/ou d'un rayon laser adaptés à solidifier le matériau de construction (15), dont l'énergie ne suffit pas à solidifier le matériau de construction.

10. Procédé d'étalonnage selon l'une quelconque des revendications 1 à 9, selon lequel
des données de correction pour un positionnement d'au moins un des rayons (22a, 22b) sont déterminées à partir de l'évaluation du signal de sortie,
dans lequel, lors de la détermination des données de correction, de préférence une différence entre une longueur d'onde d'un rayonnement servant à surveiller la zone de surveillance d'une unité de surveillance et une longueur d'onde d'un rayonnement et/ou d'un rayon cible et/ou d'un rayon laser, adaptés à solidifier le matériau de construction, dont l'énergie ne suffit pas à solidifier le matériau de construction, est prise en compte.

11. Procédé de fabrication pour la fabrication additive d'un objet (2) tridimensionnel par application couche par couche et solidification sélective d'un matériau de construction (15), de préférence d'une poudre, avec les étapes consistant à
appliquer une couche du matériau de construction (15) sur un champ de construction (8) se situant dans un plan de travail (7),
solidifier la couche du matériau de construction en des points correspondant à la section transversale respective de l'objet (2) par irradiation sélective à l'intérieur du champ de construction (8) avec au moins deux rayons (22a, 22b) d'un rayonnement, de préférence d'un rayonnement laser, adapté à solidifier le matériau de construction (15), et
répéter les étapes de l'application et de la solidification, jusqu'à ce que l'objet (2) tridimensionnel ait été fabriqué,
dans lequel un procédé d'étalonnage selon l'une quelconque des revendications 1 à 10 est réalisé au moins une fois avant le procédé de fabrication et/ou pendant le procédé de fabrication.

12. Programme informatique, qui peut être chargé dans une unité de commande (29) programmable, avec des moyens de code de programme, afin d'exécuter toutes les étapes d'un procédé d'étalonnage selon l'une quelconque des revendications 1 à 10 et/ou d'un procédé de fabrication selon la revendication 11, lorsque le programme informatique est exécuté sur l'unité de commande.

13. Système de commande pour un dispositif de fabrication (1) pour la fabrication additive d'un objet (2) tridimensionnel par application couche par couche et solidification sélective d'un matériau de construction (15), de préférence d'une poudre, dans lequel le dispositif de fabrication (1) contient :
un système de revêtement (16) destiné à appliquer une couche du matériau de construction (15) sur un champ de construction (8) se situant dans un plan de travail (7) et
au moins deux unités de balayage (23a, 23b), dont chacune est en mesure de diriger un rayon (22a, 22b) sur différents points cibles sur le plan de travail (7), de préférence sur le champ de construction (8), qui se situent à l'intérieur d'une zone de balayage (18a, 18b) associée à l'unité de balayage (23a, 23b) respective, dans lequel les zones de balayage (18a, 18b) des au moins deux unités de balayage (23a, 23b) se chevauchent mutuellement dans une zone de chevauchement (19),
dans lequel au moins une unité de surveillance (30a), dont la zone de surveillance (Ua) s'étend sur un point cible de la première unité de balayage (23a) et l'environnement proche de celui-ci, est associée à au moins une première (23a) des au moins deux unités de balayage, dans lequel une modification d'une position de la zone de surveillance (Ua) est réalisée en fonction d'une modification d'une position du point cible,
dans lequel l'unité de commande (29) est conçue pour commander le dispositif de fabrication (1), de sorte qu'il :
répète les étapes de l'application et de la solidification sélective, jusqu'à ce que l'objet (2) ait été achevé, et
réalise un procédé d'étalonnage selon l'une quelconque des revendications 1 à 10 au moins une fois avant et/ou pendant la fabrication de l'objet (2).

14. Dispositif de fabrication (1) pour la fabrication additive d'un objet (2) tridimensionnel par application couche par couche et solidification sélective d'un matériau de construction (15), de préférence d'une poudre, contenant :
un système de revêtement (16) destiné à appliquer une couche du matériau de construction (15) sur un champ de construction (8) se situant dans un plan de travail (7) et
au moins deux unités de balayage (23a, 23b), dont chacune est en mesure de diriger un rayon (22a, 22b) sur différents points cibles sur le plan de travail (7), de préférence sur le champ de construction (8), qui se situent à l'intérieur d'une zone de balayage (18a, 18b) associée à une unité de balayage (23a, 23b) respective, dans lequel les zones de balayage (18a, 18b) des au moins deux unités de balayage (23a, 23b) se chevauchent mutuellement dans une zone de chevauchement (19),
dans lequel au moins une unité de surveillance (30a), dont la zone de surveillance (Ua) s'étend sur un point cible de la première unité de balayage (23a) et l'environnement proche de celui-ci, est associée à au moins une première (23a) des au moins deux unités de balayage, dans lequel une modification d'une position de la zone de surveillance (Ua) est réalisée en fonction d'une modification d'une position du point cible,
dans lequel le dispositif de fabrication (1) est conçu et/ou commandé :
pour répéter les étapes de l'application et de la solidification sélective, jusqu'à ce que l'objet (2) ait été achevé, et
pour réaliser un procédé d'étalonnage selon l'une quelconque des revendications 1 à 10 au moins une fois avant et/ou pendant la fabrication de l'objet (2).

15. Procédé de fabrication selon la revendication 14, où l'unité de surveillance (30a, 30b) contient un capteur optique,
dans lequel le capteur optique contient de préférence une photodiode et/ou un capteur optique à résolution spatiale, de préférence un capteur CMOS ou CCD,
dans lequel l'unité de surveillance (30a, 30b) est réalisée plus préférablement sous la forme d'une caméra.
